(19) Europäisches Patentamt
European Patent Office
Office européen des brevets

(11) **EP 2 626 769 A1**

(12) **EUROPEAN PATENT APPLICATION**

(43) Date of publication:
**14.08.2013 Bulletin 2013/33**

(51) Int Cl.:
*G06F 3/01* (2006.01)　　　*G06F 3/03* (2006.01)
*G06F 1/16* (2006.01)

(21) Application number: **12154850.7**

(22) Date of filing: **10.02.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Research In Motion Limited**
**Waterloo, ON N2L 3W8 (CA)**

(72) Inventors:
• **Theimer, Wolfgang Michael**
**44799 Bochum (DE)**

• **Tendyck, Christian**
**45891 Gelsenkirchen (DE)**
• **Zgorzelski, Markus**
**44809 Bochum (DE)**

(74) Representative: **Patel, Binesh**
**Barker Brettell LLP**
**100 Hagley Road**
**Edgbaston**
**Birmingham**
**B16 8QQ (GB)**

(54) **Method and device for receiving reflectance-based input**

(57) Methods and devices for receiving reflectance-based input are provided. In some embodiments, the electronic device (201) includes a plurality of electromagnetic radiation emitting devices (102a,102b,102c,102d) and one or more electromagnetic radiation receiving devices (104a,104b) for receiving reflected light from the electromagnetic radiation emitting devices. In one aspect, a method includes: repeatedly performing a reflectance measuring routine, the reflectance measuring routine including: alternatingly outputting light at each of the plurality of electromagnetic radiation emitting devices; and monitoring light received at one or more of the electromagnetic radiation receiving devices as a result of the alternating output; determining, based on the light received at the one or more electromagnetic radiation receiving devices, whether a predetermined gesture has been performed; and performing a function associated with the predetermined gesture when the predetermined gesture has been performed.

FIG. 1

**Description**

## TECHNICAL FIELD

The present disclosure relates to input devices for electronic devices and, more particularly, to methods and devices for receiving reflectance-based input.

## BACKGROUND

Electronic devices are often equipped with one or more input devices for receiving instructions, commands, and other input from users of such electronic devices. For example, electronic devices often have one or more depressible buttons or keys which may be activated by a user to input instructions, commands, and other input to the electronic device. Such input devices may include a track pad, trackball, or touch pad, which may be used for providing navigational input to the electronic device. Recently, touchscreen display screens have become commonplace. Touchscreen displays are displays which have a touch-sensitive overlay for receiving input.

While input devices for electronic devices are available in many different shapes and sizes, such input devices often require a user to engage a specific portion of an electronic device (such as a button) through direct contact with that portion (e.g. by pressing a button). Such contact may soil the electronic device. For example, touchscreen displays sometimes become obscured from fingerprints which are left on the display following user contact. In addition to attracting dirt and debris, repeated contact on mechanically activated input devices may result in failure of such input devices over time (e.g. repeated pressing of a button may result in failure of that button).

## BRIEF DESCRIPTION OF THE DRAWINGS

Reference will now be made, by way of example, to the accompanying drawings which show example embodiments of the present application and in which:

FIG. 1 is a top view of an example electronic device having a reflectance-based input device in accordance with example embodiments of the present disclosure;

FIG. 2 is a cross-sectional view of the example electronic device of FIG. 1 taken along line 2-2 of FIG. 1;

FIG. 3 is a block diagram illustrating components of an example electronic device in accordance with example embodiments of the present disclosure;

FIG. 4 is a flowchart of an example method for receiving reflectance-based input in accordance with example embodiments of the present disclosure;

FIG. 5 is a side view of an electronic device in accordance with example embodiments of the present disclosure illustrating a vertical gesture;

FIG. 6 is an example photodiode output for a vertical gesture in accordance with example embodiments of the present disclosure;

FIG. 7 is top view of an electronic device in accordance with example embodiments of the present disclosure illustrating a horizontal gesture;

FIG. 8 is an example photodiode output for a horizontal gesture in accordance with example embodiments of the present disclosure;

FIG. 9 is a flowchart of an example method of determining a direction of a horizontal gesture in accordance with example embodiments of the present disclosure;

FIG. 10 is a flowchart of an example method for differentiating between a horizontal gesture and a vertical gesture in accordance with example embodiments of the present disclosure;

FIG. 11 is a side view of an electronic device in accordance with example embodiments of the present disclosure illustrating a rotational gesture in a first direction;

FIG. 12 is a front view of an electronic device in accordance with example embodiments of the present disclosure illustrating a rotational gesture in a second direction;

FIG. 13 is a flowchart of an example method for interpreting a rotational gesture in accordance with example embodiments of the present disclosure; and

FIG. 14 is a top view of an example gesture companion device in accordance with example embodiments of the present disclosure.

Like reference numerals are used in the drawings to denote like elements and features.

## DETAILED DESCRIPTION OF EXAMPLE EMBODIMENTS

In one aspect, the present disclosure describes a method for receiving reflectance-based input on an electronic device. The electronic device includes a plurality of electromagnetic radiation emitting devices and one or more electromagnetic radiation receiving devices s for receiving reflected light from the electromagnetic radiation emitting devices. The method includes: repeatedly performing a reflectance measuring routine, the reflectance measuring routine including: i) alternatingly outputting light at each of the plurality of electromagnetic radiation emitting devices; and ii) monitoring light received at one or more of the electromagnetic radiation receiving devices as a result of the alternating output. The method further includes: determining, based on the light received at the one or more electromagnetic radiation receiving devices, whether a predetermined gesture has been performed; and performing a function associated with the predetermined gesture when the predetermined gesture has been performed.

In yet another aspect, the present disclosure describes an electronic device. The electronic device includes a reflectance-based input device. The reflectance-based input device comprises a plurality of electromagnetic radiation emitting devices and one or more electromagnetic radiation receiving devices for receiving reflected light from the electromagnetic radiation emitting devices. The reflectance-based input device may be configured to alternatingly output light at each of a plurality of the electromagnetic radiation emitting devices and to monitor light received at one or more of the electromagnetic radiation receiving devices as a result of the alternating output. The electronic device includes a processor which is configured to: determine, based on the light received at the one or more electromagnetic radiation receiving devices, whether a predetermined gesture has been performed; and perform a function associated with the predetermined gesture when the predetermined gesture has been performed..

In yet another aspect, the present disclosure describes a gesture companion device. The gesture companion device includes a reflectance-based input device. The reflectance-based input device includes a plurality of electromagnetic radiation emitting devices and one or more electromagnetic radiation receiving devices for receiving reflected light from the electromagnetic radiation emitting devices. The gesture companion device further includes a short range communication subsystem for sending data to a primary electronic device based on the received reflected light.

In yet another aspect, the present disclosure describes a reflectance-based input device. The reflectance-based input device comprises: four infrared diodes arranged in a rectangle; and one or more photodiodes for receiving reflected light from the infrared diodes.

Other example embodiments of the present disclosure will be apparent to those of ordinary skill in the art from a review of the following detailed descriptions in conjunction with the drawings.

## Example Electronic Device with Reflectance-based Input Device

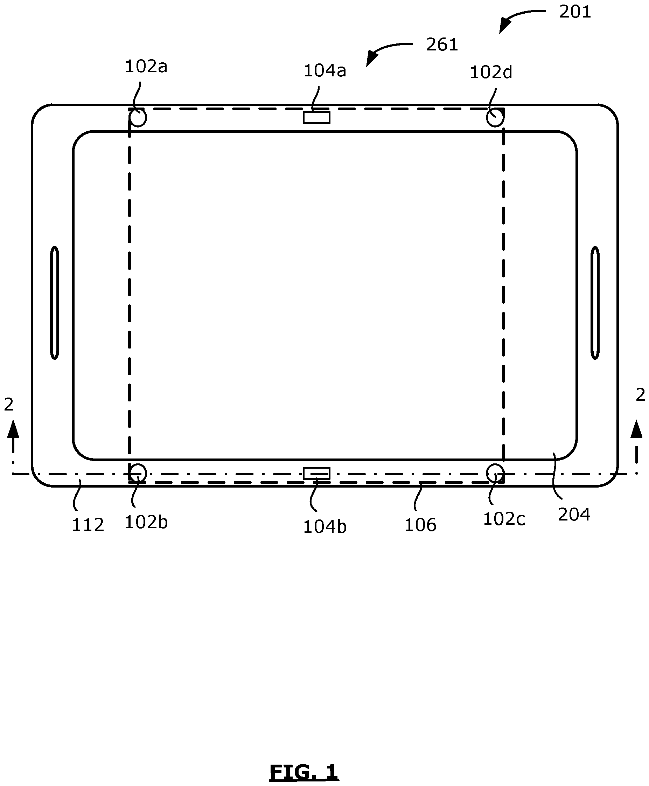

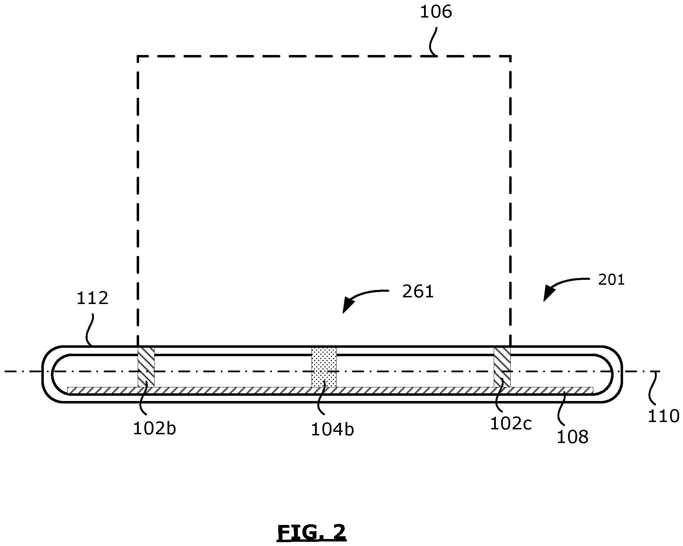

Reference will now be made to FIGs. 1 and 2 which illustrate an example electronic device 201 which includes a reflectance-based input device 261. A top view of the electronic device 201 is illustrated in FIG. 1. FIG. 2 illustrates a cross sectional view of the electronic device 201, taken along line 2-2 of FIG. 1.

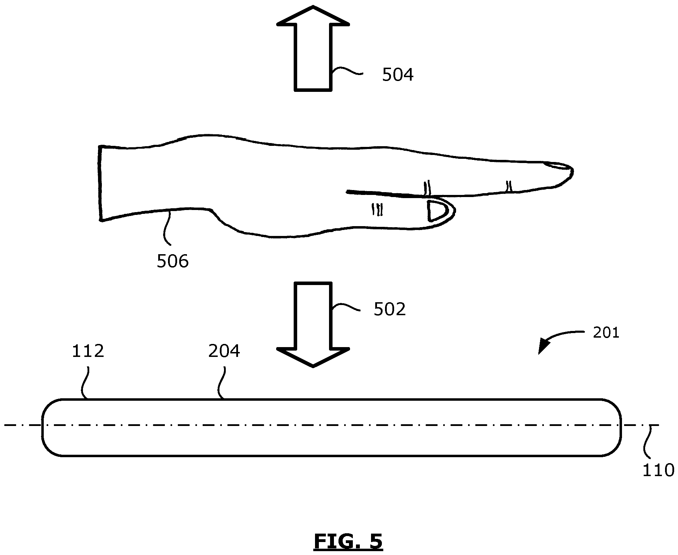

The reflectance-based input device 261 is configured to allow a user of the electronic device 201 to input one or more instructions, commands, or other input to the electronic device 201. More particularly, the reflectance-based input device 261 may be configured to receive contactless input from a user of the electronic device 201. Contactless input, which may also be referred to as touch-less input, is input which does not require a user to physically touch the electronic device 201. For example, the contactless input may be provided by a user to the electronic device 201 through movement of a hand 506 (FIG. 5), or other object in a specific region near the electronic device 201.

More particularly, the contactless input may be provided by a user by moving a hand 506 (FIG. 5) or other object within a sensing area 106 associated with the reflectance-based input device 261 of the electronic device 201. The sensing area 106 may be described as a region of space near the electronic device 201 in which the electronic device 201 is able to monitor movements of objects. More particularly, the sensing area 106 may be described, in one example, as a region of space in which the reflectance-based input device 261 is able to detect object movement, such as the movement of a hand.

In the embodiment of FIGS. 1 and 2, the reflectance-based input device 261 includes a plurality of infrared diodes 102a, 102b, 102c, 102d. In such an embodiment, the reflectance-based input device 261 may also be referred to as an infrared sensing arrangement. In the embodiment of FIGS. 1 and 2, the reflectance-based input device 261 includes number of electromagnetic radiation emitting devices. In one example, the reflectance-based input device 261 includes four infrared diodes: a first infrared diode 102a, a second infrared diode 102b, a third infrared diode 102c, and a fourth infrared diode 102d. The infrared diodes 102a, 102b, 102c, 102d are mounted in spaced relation to one another so that each infrared diode 102a, 102b, 102c, 102d emits light at a different region of the electronic device 201. In the embodiment of FIGS. 1 and 2, the infrared diodes are arranged in a square pattern in which each infrared diode 102a, 102b, 102c, 102d is located at a separate corner of the square. In at least some embodiments, the infrared diodes 102a, 102b, 102c, 102d may be disposed along the sides of a display 204. In the example embodiment illustrated, two of the infrared diodes 102a, 102d are located along one side of the display 204 and another two of the infrared diodes 102b, 102c are located along an opposing side of the display 204. While the example embodiment illustrated includes four infrared diodes which are arranged in a square, the reflectance-based input device 261 may, in other embodiments, include a different number of infrared diodes 102a, 102b, 102c, 102d and/or may arrange the infrared diodes 102a, 102b, 102c, 102d in a different pattern. For example, the reflectance-based input device 261 may include three or more infrared diodes.

As illustrated in FIG. 2, the infrared diodes 102a, 102b, 102c, 102d define a plane 110. The plane 110 may pass through each of the infrared diodes 102a, 102b, 102c, 102d. More particularly, the plane 110 may pass through the infrared diodes 102a, 102b, 102c, 102d at a common position on all of the infrared diodes 102a, 102b, 102c, 102d. For example, in the example of FIG. 2, the plane 110 passes through a midpoint of each of the infrared diodes 102a, 102b, 102c, 102d (e.g. midway between the top of the infrared diode and the bottom of the infrared diode). The plane 110 may, in other embodiments, pass through the top of each of the infrared diodes 102a, 102b, 102c, 102d or, in other embodiments, through the bottom of each of the infrared diodes 102a, 102b, 102c, 102d. The plane 110 may be parallel to a face of the electronic device 201. For example, in the embodiment of FIGS. 1 and 2, the plane 110 is parallel to a display 204 of the electronic device 201.

The infrared diodes 102a, 102b, 102c, 102d are configured to emit infrared light from one side of the electronic device 201. That is, the infrared diodes 102a, 102b, 102c, 102d may be diodes which emit light which is outside of the visible spectrum. The side of the electronic device 201 which emits such light may be referred to as the sensing side 112.

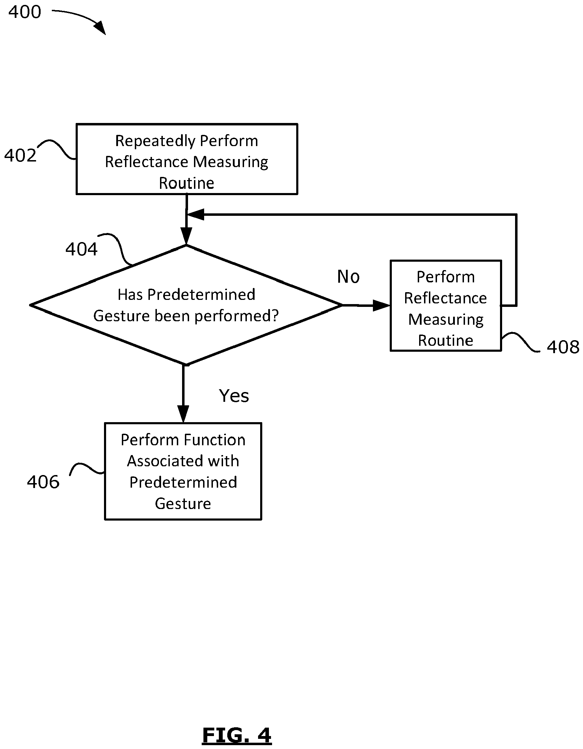

As will be discussed in greater detail below with reference to FIG. 4, the infrared diodes 102a, 102b, 102c, 102d may be configured to alternatingly emit a pulse of infrared light. That is, infrared light may be alternatingly output from the infrared diodes 102a, 102b, 102c, 102d so that no two infrared diodes are emitting light at the same time. That is, each infrared diode 102a, 102b, 102c, 102d may take its turn at outputting infrared light while the other infrared diodes 102a, 102b, 102c, 102d are idle.

When light is emitted by the infrared diodes 102a, 102b, 102c, 102d, the light may be reflected by an object (such as a hand 506 (FIG. 5)) which is located in the sensing area 106. That is, the light may be reflected by an object which is located at the sensing side 112 of the electronic device 201 (i.e. the side from which infrared light is emitted).

The reflectance-based input device 261 of the electronic device 201 includes one or more electromagnetic radiation receiving devices. In one example, the reflectance-based input device 261 of the electronic device 201 includes photodiodes 104a, 104b for receiving light which is output from the infrared diodes 102a, 102b, 102c, 102d and reflected by an object (such as a hand 506 (FIG. 5)) in the sensing area 106. That is, the photodiodes 104a, 104b may be light-sensitive components which generate a potential difference or changes in electrical resistance when exposed to light. Accordingly, the photodiodes 104a, 104b may produce signals which are representative of the light received at the photodiodes 104a, 104b. The photodiodes 104a, 104b produce signals which depend on the amount of light which was output from an infrared diode and which was reflected by an object and received at the photodiode 104a, 104b.

The example reflectance-based input device 261 of FIGS. 1 and 2 includes two photodiodes 104a, 104b: a first photodiode 104a and a second photodiode 104b. In the example embodiment of FIGs 1 and 2, the photodiodes 104a, 104b are located along the sides of a display 204. In the example embodiment illustrated, one of the photodiodes 104b is located on one side of the display 204 (which is the same side at which two of the infrared diodes 102b, 102c are located) and another one of the photodiodes 104a is located on an opposing side of the display 204 (which is the same side at which the other two infrared diodes 102a, 102d are located).

The photodiodes 104a, 104b may each be located along a line whose endpoints are defined by two of the infrared diodes 102a, 102b, 102c, 102d. For example, in the illustrated embodiment, a first photodiode 104a is located along a line defined by the first infrared diode 102a and the fourth infrared diode 102d and a second photodiode 104b is located along a line defined by the second infrared diode 102b and the third infrared diode 102c. The photodiodes 104a, 104b may each be disposed midway between two of the infrared diodes 102a, 102b, 102c, 102d. For example, the first photodiode 104a may be located midway between the first infrared diode 102a and the fourth infrared diode 102d and the second photodiode 104b may be located midway between the second infrared diode 102b and the third infrared diode 102c.

The photodiodes 104a, 104b and the infrared diodes 102a, 102b, 102c, 102d may be mounted on a substrate 108 (FIG. 2), such as a printed circuit board. In at least some embodiments, the photodiodes 104a, 104b and the infrared diodes 102a, 102b, 102c, 102d may be surface mount components.

The photodiodes 104a, 104b are generally oriented so that the photodiodes sense little or no direct light from the infrared diodes 102a, 102b, 102c, 102d. That is, the light emitted from the infrared diodes 102a, 102b, 102c, 102d is not directed at the photodiodes 104a, 104b. Instead, the photodiodes 104a, 104b are orientated to capture reflected light. That is, the photodiodes 104a, 104b are oriented to capture light which is emitted from the infrared diodes 102a, 102b, 102c, 102d and which reflects off of an object and is then directed at the photodiodes 104a, 104b. In the embodiment of FIG. 2, the photodiodes 104a, 104b are planar with the infrared diodes 102a, 102b, 102c, 102d.

The reflectance-based input device 261 has a sensing area 106. The sensing area 106 is a region in space in which an object located within that area may receive light from one of the infrared diodes 102a, 102b, 102c, 102d and may reflect the light to one of the photodiodes 104a, 104b. Accordingly, the sensing area 106 is defined, at least in part, by the infrared diodes 102a, 102b, 102c, 102d.

**EP 2 626 769 A1**

For the purposes of illustration, the sensing area 106 has been illustrated as a region which is a rectangular prism, having corners which are formed by the infrared diodes 102a, 102b, 102c, 102d. While such a sensing area 106 is useful for illustration and conceptual purposes, such a well-defined sensing area may not exist in practice. The sensing area 106 may not be a rectangular prism and may not be static. That is, the sensing area 106 may not be the same for all purposes, and in all environments. The sensing area 106 may, for example, depend on the shape of an object reflecting light, the ambient lighting, the material of the object and its ability to reflect light, and other factors. The sensing area 106 is a three-dimensional area. That is, the sensing area is a region of space and is not an area in the mathematic sense.

Furthermore, the sensing area 106 will typically not be aligned with the infrared diodes 102a, 102b, 102c, 102d as illustrated in FIG. 1 (i.e. the infrared diodes may not form corners of the sensing area 106) since objects outside of this area may reflect light. That is, an object on the outside of the sensing area 106 illustrated in FIGs. 1 and 2 may reflect light which was emitted from one of the infrared diodes 102a, 102b, 102c, 102d so that such reflected light is received at one of the photodiodes 104a, 104b.

As will be discussed in greater detail with respect to FIG. 4 below, in at least some embodiments, the reflectance-based input device 261 may be used by the electronic device 201 to determine the presence of an object within the sensing area 106. That is, the reflectance-based input device 261 may be used by the electronic device 201 to determine whether a hand 506 (FIG. 5) or other object is present within the sensing area 106. In at least some embodiments, the reflectance-based input device 261 may be used by the electronic device 201 to determine whether a hand 506 (FIG. 5) or other object is moved within the sensing area 106 and, in at least some embodiments, to determine one or more movement characteristics regarding such movement. A movement characteristic may by a characteristic which describes the type of movement of the object within the sensing area 106, such as the direction or velocity of the movement.

The type of movement may, for example, be a vertical gesture (i.e. a gesture in which an object is moved perpendicular to the plane 110 defined by the infrared diodes 102a, 102b, 102c, 102c, 102d), or a horizontal gesture (i.e. a gesture in which an object is moved parallel to the plane 110 defined by the infrared diodes 102a, 102b, 102c, 102d), or a rotational gesture (i.e. a gesture in which an object is rotated relative to the plane 110 defined by the infrared diodes 102a, 102b, 102c, 102d).

In at least some embodiments, the electronic device 201 may determine one or more movement characteristics regarding the movement of the object. For example, in at least some embodiments, the electronic device 201 may determine, based on the reflected light received at the photodiodes 104a, 104b, the direction of movement of the object. For example, in some embodiments, when the movement is a vertical gesture, the electronic device 201 may determine whether the movement is an inward vertical gesture (i.e. a movement of the object towards the electronic device 201) or an outward vertical gesture (i.e. a movement of the object away from the electronic device 201). Similarly, in at least some embodiments, the electronic device 201 may be configured to determine a velocity of the movement.

Accordingly, in at least some embodiments, based on the reflected light received at the photodiodes 104a, 104b, the electronic device 201 may determine whether one or more gestures have been performed.

In the embodiment of FIGs. 1 and 2, the electronic device 201 is a tablet computer. A tablet computer (which may also be referred to as a tablet) is an electronic device which is generally larger than a mobile phone (such as a smartphone) or personal digital assistant. Many mobile phones or personal digital assistants are designed to be pocket sized. That is, mobile phones or personal digital assistants are generally small enough to be carried by a person easily, often in a shirt or pant pocket while tablet computers are larger and may not fit within pant pockets. For example, many tablet computers have a height which is seven inches (7") or more. In some example embodiments, the tablet computer may be a slate computer. A slate computer is a tablet computer which does not include a dedicated keyboard. A slate computer may allow for text input through the use of a virtual keyboard or an external keyboard which connects to the slate computer via a wired or wireless connection.

In other embodiments, the electronic device 201 may be a smartphone. A smartphone is a mobile phone which offers more advanced computing capability than a basic non-smart cellular phone. For example, a smartphone may have the ability to run third party applications which are stored on the smartphone.

The electronic device 201 may, in other embodiments, be of another type. For example, in some embodiments, the electronic device may be a remote control, such as a television remote control, a navigation system, such as a Global Positioning System, a wearable computer, such as a watch, a personal digital assistant (PDA), a desktop, netbook, notebook or laptop style computer system, or a television.

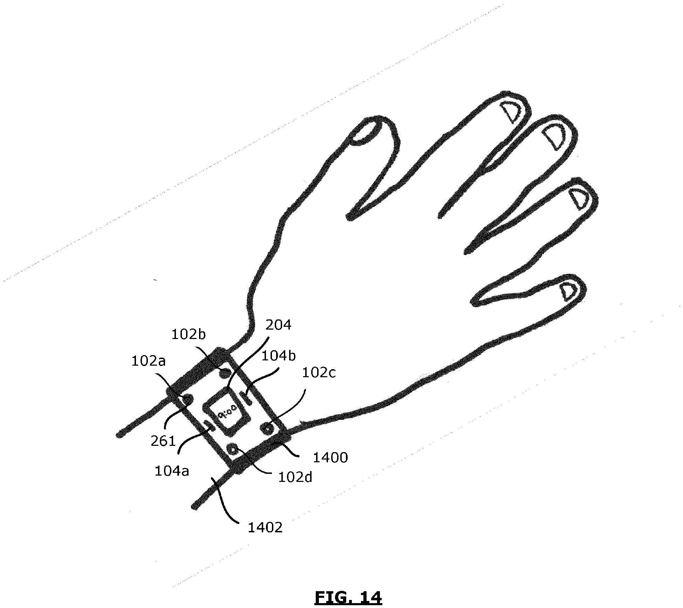

As will be described in greater detail below with reference to FIG. 14, in at least some embodiments, the electronic device 201 may be a gesture companion device 1400 (FIG. 14). A gesture companion device is an electronic device 201 which acts as a peripheral for another electronic device. More particularly, the gesture companion device may be an input device which may be used for receiving reflectance-based input. Where the electronic device 201 is a gesture companion device, the reflectance-based input may be used, for example, by another electronic device (which may be referred to as a primary electronic device). The primary electronic device may, for example, be a smartphone, tablet computer, television, navigation system, PDA, desktop, netbook, notebook or laptop style computer system, or an electronic device of a different type. The gesture companion device 1400 may be used for receiving reflectance-

5

based input, but the reflectance-based input may control the primary electronic device. That is, the primary electronic device may perform a function based on the reflectance-based input received at the gesture companion device.

The electronic device 201 may, in other embodiments, be of a type not specifically listed herein.

One or more modifications may be made to the reflectance-based input device 261 of FIGs. 1 and 2. For example, while the infrared diodes 102a, 102b, 102c, 102d of FIGs. 1 and 2 are arranged in a square orientation, in other embodiments, the infrared diodes 102a, 102b, 102c, 102d may be arranged in another shape. For example, in some embodiments, the infrared diodes may be arranged in a rectangular shape.

Similarly, while the embodiment of FIGs. 1 and 2 include four infrared diodes 102a, 102b, 102c, 102d, other embodiments may include a different number of infrared diodes. For example, in some embodiments, there are three infrared diodes.

Similarly, while the embodiment of FIGs. 1 and 2 includes two photodiodes 104a, 104b, in other embodiments, the reflectance-based input device 261 may include more or less photodiodes than the reflectance-based input device 261 of FIGs. 1 and 2. For example, in some embodiments, the reflectance-based input device 261 may include a single photodiode 104a, 104b.

## Example Electronic Device

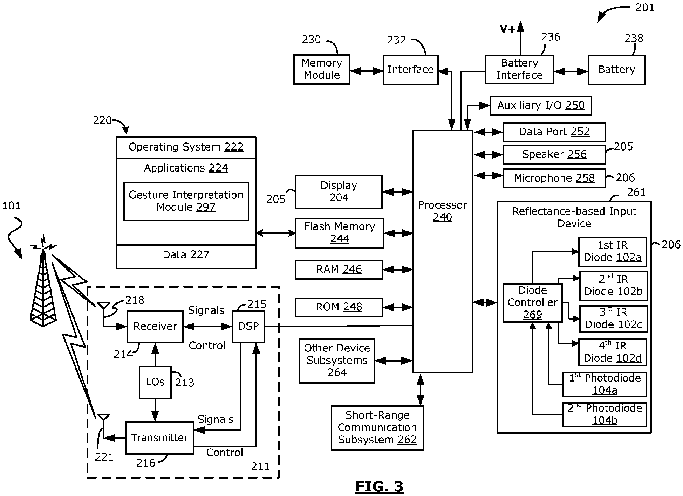

An overview having been provided, reference will now be made to FIG. 3, which illustrates an example electronic device 201. In the illustrated example embodiment, the electronic device 201 is a mobile communication device. In at least some example embodiments, the mobile communication device is a two-way communication device having data and possibly voice communication capabilities, and the capability to communicate with other computer systems; for example, via the internet. As noted above, the electronic device 201 may take other forms in other embodiments.

The electronic device 201 of FIG. 3 includes a housing (not shown) which houses components of the electronic device 201. Internal components of the electronic device 201 may be constructed on a printed circuit board (PCB). The electronic device 201 includes a controller including at least one processor 240 (such as a microprocessor) which controls the overall operation of the electronic device 201. The processor 240 interacts with device subsystems such as a wireless communication subsystem 211 for exchanging radio frequency signals with a wireless network 101 to perform communication functions. The processor 240 interacts with additional device subsystems including one or more input interfaces 206 (such as a keyboard, one or more control buttons, one or more microphones 258, a reflectance-based input device 261, and/or a touch-sensitive overlay associated with a touchscreen display), flash memory 244, random access memory (RAM) 246, read only memory (ROM) 248, auxiliary input/output (I/O) subsystems 250, a data port 252 (which may be a serial data port, such as a Universal Serial Bus (USB) data port), one or more output interfaces 205 (such as a display 204 (which may be a liquid crystal display (LCD)), one or more speakers 256, or other output interfaces 205), a short-range communication subsystem 262, and other device subsystems generally designated as 264. Some of the subsystems shown in FIG. 3 perform communication-related functions, whereas other subsystems may provide "resident" or on-device functions.

The electronic device 201 may include a touchscreen display in some example embodiments. The touchscreen display may be constructed using a touch-sensitive input surface connected to an electronic controller. The touch-sensitive input surface overlays the display 204 and may be referred to as a touch-sensitive overlay. The touch-sensitive overlay and the electronic controller provide a touch-sensitive input interface 206 and the processor 240 interacts with the touch-sensitive overlay via the electronic controller. That is, the touchscreen display acts as both an input interface 206 and an output interface 205.

The communication subsystem 211 includes a receiver 214, a transmitter 216, and associated components, such as one or more antenna elements 218 and 221, local oscillators (LOs) 213, and a processing module such as a digital signal processor (DSP) 215. The antenna elements 218 and 221 may be embedded or internal to the electronic device 201 and a single antenna may be shared by both receiver 214 and transmitter 216, as is known in the art. The particular design of the wireless communication subsystem 211 depends on the wireless network 101 in which the electronic device 201 is intended to operate.

The electronic device 201 may communicate with any one of a plurality of fixed transceiver base stations of the wireless network 101 within its geographic coverage area. The electronic device 201 may send and receive communication signals over the wireless network 101 after the required network registration or activation procedures have been completed. Signals received by the antenna 218 through the wireless network 101 are input to the receiver 214, which may perform such common receiver functions as signal amplification, frequency down conversion, filtering, channel selection, etc., as well as analog-to-digital (A/D) conversion. A/D conversion of a received signal allows more complex communication functions such as demodulation and decoding to be performed in the DSP 215. In a similar manner, signals to be transmitted are processed, including modulation and encoding, for example, by the DSP 215. These DSP-processed signals are input to the transmitter 216 for digital-to-analog (D/A) conversion, frequency up conversion, filtering, amplification, and transmission to the wireless network 101 via the antenna 221. The DSP 215 not only processes communication signals, but may also provide for receiver and transmitter control. For example, the gains applied to communication signals in the receiver 214 and the transmitter 216 may be adaptively controlled through automatic gain control algorithms implemented in the DSP 215.

In some example embodiments, the auxiliary input/output (I/O) subsystems 250 may include an external communication link or interface, for example, an Ethernet connection. The electronic device 201 may include other wireless communication interfaces for communicating with other types of wireless networks; for example, a wireless network such as an orthogonal frequency division multiplexed (OFDM) network.

In some example embodiments, the electronic device 201 also includes a removable memory module 230 (typically including flash memory) and a memory module interface 232. Network access may be associated with a subscriber or user of the electronic device 201 via the memory module 230, which may be a Subscriber Identity Module (SIM) card for use in a GSM network or other type of memory module for use in the relevant wireless network type. The memory module 230 may be inserted in or connected to the memory module interface 232 of the electronic device 201.

The electronic device 201 may store data 227 in an erasable persistent memory, which in one example embodiment is the flash memory 244. In various example embodiments, the data 227 may include service data having information required by the electronic device 201 to establish and maintain communication with the wireless network 101. The data 227 may also include user application data such as email messages, address book and contact information, calendar and schedule information, notepad documents, image files, and other commonly stored user information stored on the electronic device 201 by its user, and other data.

The data 227 stored in the persistent memory (e.g. flash memory 244) of the electronic device 201 may be organized, at least partially, into a number of databases or data stores each containing data items of the same data type or associated with the same application. For example, email messages, contact records, and task items may be stored in individual databases within the electronic device 201 memory.

The data port 252 may be used for synchronization with a user's host computer system. The data port 252 enables a user to set preferences through an external device or software application and extends the capabilities of the electronic device 201 by providing for information or software downloads to the electronic device 201 other than through the wireless network 101. The alternate download path may for example, be used to load an encryption key onto the electronic device 201 through a direct, reliable and trusted connection to thereby provide secure device communication.

In some example embodiments, the electronic device 201 is provided with a service routing application programming interface (API) which provides an application with the ability to route traffic through a serial data (i.e., USB) or Bluetooth® (Bluetooth® is a registered trademark of Bluetooth SIG, Inc.) connection to the host computer system using standard connectivity protocols. When a user connects their electronic device 201 to the host computer system via a USB cable or Bluetooth® connection, traffic that was destined for the wireless network 101 is automatically routed to the electronic device 201 using the USB cable or Bluetooth® connection. Similarly, any traffic destined for the wireless network 101 is automatically sent over the USB cable Bluetooth® connection to the host computer for processing.

The electronic device 201 also includes a battery 238 as a power source, which is typically one or more rechargeable batteries that may be charged, for example, through charging circuitry coupled to a battery interface 236 such as the serial data port 252. The battery 238 provides electrical power to at least some of the electrical circuitry in the electronic device 201, and the battery interface 236 provides a mechanical and electrical connection for the battery 238. The battery interface 236 is coupled to a regulator (not shown) which provides power V+ to the circuitry of the electronic device 201.

The short-range communication subsystem 262 is an additional optional component which provides for communication between the electronic device 201 and different systems or devices, which need not necessarily be similar devices. For example, the short-range communication subsystem 262 may include an infrared device and associated circuits and components, or a wireless bus protocol compliant communication mechanism such as a Bluetooth® communication module to provide for communication with similarly-enabled systems and devices.

The electronic device 201 includes a reflectance-based input device 261. The reflectance-based input device 261 is an input interface 206 which allows the electronic device 201 to receive contactless input. The reflectance-based input device 261 includes plurality of infrared diodes 102a, 102b, 102c, 102d which may, for example, be the infrared diodes 102a, 102b, 102c, 102d of FIGs. 1 and 2. The reflectance-based input device 261 also includes one or more photodiodes 104a, 104b which may, for example, be the photodiodes 104a, 104b of FIGs. 1 and 2.

The reflectance-based input device 261 also includes a diode controller 269. The diode controller 269 is electrically connected to the infrared diodes 102a, 102b, 102c, 102d and is configured to control the infrared diodes. That is, the diode controller 269 is configured to cause one or more infrared diodes to emit a pulse of infrared light. In at least some embodiments, the diode controller 269 may include timing components. The timing components may be hardware or software based components which may be used to cause the infrared diodes to emit a pulse of infrared light according to a timing schedule. In at least some embodiments, the diode controller 269 is configured to cause the infrared diodes to alternatingly output a pulse of light. That is, the diode controller 269 may cause a pulse of infrared light to be alternatingly output from each of a plurality of infrared diodes 102a, 102b, 102c, 102d. More particularly, the diode controller 269 may be configured to trigger the infrared diodes 102a, 102b, 102c, 102d so that no two infrared diodes emit light at any given time. That is, while one infrared diode is emitting light, the diode controller 269 may cause the other infrared diodes to remain idle (i.e. to not emit any light).

Accordingly, in at least some embodiments, the diode controller 269 is configured to trigger the infrared diodes 102a, 102b, 102c, 102d one-by-one. After an infrared diode is triggered, the diode controller 269 may wait before triggering another one of the infrared diodes. For example, after an infrared diode is triggered, the diode controller 269 may wait a predetermined period of time before triggering another infrared diode. This period of time may allow the electronic device 201 to observe the amount of light that is reflected following each pulse. The diode controller 269 may alternately trigger the infrared diodes until all of the infrared diodes have been triggered (i.e. until all of the infrared diodes have had an opportunity to emit a pulse of light). After all of the infrared diodes have been triggered, the diode controller 269 may begin the triggering process again. For example, the diode controller 269 may then cause an infrared diode which was already triggered (i.e. which already emitted light) to do so again.

The diode controller 269 is also electrically connected to the one or more photodiodes 104a, 104b. More particularly, the diode controller 269 is configured to act as a receiver and to receive signals from the photodiodes 104a, 104b which are representative of the light received by the photodiodes 104a, 104b. That is, the signals which are output by the photodiodes 104a, 104b and received at the diode controller 269 may indicate the amount of light received at the photodiodes 104a, 104b.

In at least some embodiments, the diode controller 269 is configured to sample the light received at one or more of the photodiodes 104a, 104b during or immediately after each pulse of light emitted from an infrared diode 102a, 102b, 102c, 102d. That is, when one of the infrared diodes 102a, 102b, 102c, 102d emits a pulse of light, the diode controller 269 observes the amount of light that is received at one or more of the photodiodes 104a, 104b. That is, the diode controller 269 may be configured to observe the amount of light received at one or more of the photodiodes 104a, 104b as a result of a pulse of light being emitted from an infrared diode 102a, 102b, 102c, 102d.

In at least some embodiments, the diode controller 269 may be configured to sample the light received at all of the photodiodes 104a, 104b. That is, when light is emitted from an infrared diode 102a, 102b, 102c, 102d, the diode controller 269 may sample the light received at all of the photodiodes 104a, 104b to allow the electronic device 201 to assess the amount of emitted light which was reflected to each photodiode 104a, 104b. In other embodiments, the diode controller 269 may not, during or immediately after each pulse of light, sample the light received at all photodiodes 104a, 104b. For example, in at least some embodiments, when light is emitted from an infrared diode 102a, 102b, 102c, 102d, the diode controller 269 may only sample the light received at one of the photodiodes 104a, 104b. That is, in at least some embodiments, the measurement of the amount of light from only one of the photodiodes 104a, 104b may be monitored and/or considered. Accordingly, in at least some embodiments, when a pulse of light is emitted at an infrared diode 102a, 102b, 102c, 102d, the received light at one of the photodiodes 104a, 104b may be monitored and/or considered and the received light at another one of the photodiodes 104a, 104b may be ignored (i.e. either not monitored or not considered or both).

In at least some embodiments, the photodiode 104a, 104b which is used for the monitoring (i.e. the photodiode 104a, 104b which is sampled) will depend on the infrared diode 102a, 102b, 102c, 102d which emitted the pulse of infrared light. For example, in some embodiments, the photodiode 104a, 104b which is closest to the infrared diode 102a, 102b, 102c, 102d which emitted the light will be used to measure the reflected light. For example, when light is emitted from a first infrared diode 102a, the light received at the photodiode 104a, 104b which is closest to that infrared diode 102a may be considered and/or monitored (e.g. in the example embodiment of FIG. 1 this is the first photodiode 104a) and the light received at the other photodiode may be ignored (e.g. in the example embodiment of FIG. 1 this is the second photodiode 104b). Similarly, when light is emitted from a second infrared diode 102b, the light received at the photodiode 104a, 104b which is closest to that infrared diode 102b may be considered and/or monitored (e.g. in the example embodiment of FIG. 1 this is the second photodiode 104b) and the light received at the other photodiode may be ignored (e.g. in the example embodiment of FIG. 1 this is the first photodiode 104a). Similarly, when light is emitted from a third infrared diode 102c, the light received at the photodiode 104a, 104b which is closest to that infrared diode 102c may be considered and/or monitored (e.g. in the example embodiment of FIG. 1 this is the second photodiode 104b) and the light received at the other photodiode may be ignored (e.g. in the example embodiment of FIG. 1 this is the first photodiode 104a). Similarly, when light is emitted from a fourth infrared diode 102d, the light received at the photodiode 104a, 104b which is closest to that infrared diode 102d may be considered and/or monitored (e.g. in the example embodiment of FIG. 1 this is the first photodiode 104a) and the light received at the other photodiode may be ignored (e.g. in the example embodiment of FIG. 1 this is the second photodiode 104b).

In at least some embodiments, the diode controller 269 is configured to store data representing the received light to a memory, such as in a cache or a permanent memory. In some embodiments, the diode controller 269 may output data representing the received light to the processor 240 of the electronic device 201. In at least some such embodiments, the processor 240 may store the data in memory, such as a cache. Accordingly, the diode controller 169 may be communicably connected to the processor 240.

The diode controller 269 may, in at least some embodiments, be configured to perform signal processing on signals received from the photodiodes 104a, 104b. For example, in some example embodiments, the diode controller 269 may be configured to perform noise filtering and/or to filter out effects due to ambient light (e.g. light from sources other than the infrared diodes 104a, 104b, 104c, 104d). In at least some such embodiments, the diode controller 269 may be equipped with one or more hardware or software based filters.

By way of further example, in at least some embodiments, the diode controller 269 may be configured to amplify the signals received from the photodiodes 104a, 104b. For example, the diode controller 269 may be equipped with a signal amplifier which may be used to amplify such signals. In at least some embodiments, the diode controller 269 may output data based on the amplified signals to the processor 240 and/or store data representing the amplified signals to memory.

In at least some embodiments, the diode controller 269 may include a processor and/or memory. In at least some embodiments, the processor may be configured to determine, from the signals from the photodiodes, whether one or more predetermined gestures have been performed. In at least some embodiments, the processor of the diode controller 269 may be configured to perform the functions of the gesture interpretation module 297 described below. In at least some such embodiments, a memory associated with the processor of the diode controller 269 may include computer readable instructions which, when executed, cause the processor of the diode controller 269 to perform one or more of the functions of the gesture interpretation module 297 which are discussed in greater detail below.

A predetermined set of applications that control basic device operations, including data and possibly voice communication applications may be installed on the electronic device 201 during or after manufacture. Additional applications and/or upgrades to an operating system 222 or software applications 224 may also be loaded onto the electronic device 201 through the wireless network 101, the auxiliary I/O subsystem 250, the data port 252, the short-range communication subsystem 262, or other suitable device subsystems 264. The downloaded programs or code modules may be permanently installed; for example, written into the program memory (e.g. the flash memory 244), or written into and executed from the RAM 246 for execution by the processor 240 at runtime.

In some example embodiments, the electronic device 201 may provide two principal modes of communication: a data communication mode and a voice communication mode. In the data communication mode, a received data signal such as a text message, an email message, or webpage download will be processed by the communication subsystem 211 and input to the processor 240 for further processing. For example, a downloaded webpage may be further processed by a web browser or an email message may be processed by the email messaging application and output to the display 204. A user of the electronic device 201 may also compose data items, such as email messages; for example, using an input interface 206 in conjunction with the display 204. These composed items may be transmitted through the communication subsystem 211 over the wireless network 101.

In the voice communication mode, the electronic device 201 provides telephony functions and may operate as a typical cellular phone. The overall operation is similar to the data communication mode, except that the received signals would be output to the speaker 256 and signals for transmission would be generated by a transducer such as the microphone 258. The telephony functions are provided by a combination of software/firmware (i.e., a voice communication module) and hardware (i.e., the microphone 258, the speaker 256 and input devices). Alternative voice or audio I/O subsystems, such as a voice message recording subsystem, may also be implemented on the electronic device 201. Although voice or audio signal output may be accomplished primarily through the speaker 256, the display 204 may also be used to provide an indication of the identity of a calling party, duration of a voice call, or other voice call related information.

The processor 240 operates under stored program control and executes software modules 220 stored in memory such as persistent memory; for example, in the flash memory 244. As illustrated in FIG. 3, the software modules 220 may include operating system software 222 and one or more additional applications 224 or modules such as, for example, a gesture interpretation module 297. In the example embodiment of FIG. 3, the gesture interpretation module 297 is illustrated as being implemented as a stand-alone application 224, but in other example embodiments, the gesture interpretation module 297 could be implemented as part of the operating system 222 or another application 224. Furthermore, as noted above, in at least some embodiments, the gesture interpretation module 297 could be implemented as software or hardware included in the diode controller 269. For example, the diode controller 269 may, in some embodiments, include a processor which may be configured to perform one or more of the functions of the gesture interpretation module 297.

The gesture interpretation module 297 is configured to determined, based on the amount of light received at the photodiodes, whether a predetermined gesture has occurred. The predetermined gesture may, for example, be a contactless gesture which does not require contact with the electronic device 201. That is, the predetermined gesture may be a gesture which is performed in space. Example methods for determining whether a predetermined gesture has been performed will be discussed below with reference to FIGs. 4 to 13. The gesture interpretation module 297 may, in at least some embodiments, be configured to perform the methods of any one or more of FIGs. 4 to 13.

The electronic device 201 may include a range of additional software applications 224, including, for example, a notepad application, voice communication (i.e. telephony) application, mapping application, a media player application, or any combination thereof. Each of the software applications 224 may include layout information defining the placement of particular fields and graphic elements (e.g. text fields, input fields, icons, etc.) in the user interface (i.e. the display 204) according to the application.

The software modules 220 or parts thereof may be temporarily loaded into volatile memory such as the RAM 246. The RAM 246 is used for storing runtime data variables and other types of data or information. Although specific functions are described for various types of memory, this is merely one example, and a different assignment of functions to types of memory could also be used.

## Example Methods for Receiving Reflectance-Based Input

### Gesture Detection

Referring now to FIG. 4, an example method 400 for receiving reflectance-based input on an electronic device 201 (FIG. 3) is illustrated in flowchart form. The method 400 includes features which may be provided by an electronic device 201, such as the electronic device 201 of FIG. 3. More particularly, one or more application or module associated with the electronic device 201, such as the contactless gesture interpretation module 297 (FIG. 3), may contain processor readable instructions for causing a processor associated with the electronic device 201 to perform one or more steps of the method 400 of FIG. 4. That is, in at least some example embodiments, the electronic device 201 may be configured to perform the method 400 of FIG. 4.

In at least some embodiments, one or more functions or features of the method 400 may be performed by the reflectance-based input device 261 (FIG.3). For example, a diode controller 269 associated with the reflectance-based input device 261 may be configured to perform one or more steps of the method 400 of FIG. 4.

In at least some embodiments, one or more of the functions or features of the method 400 of FIG. 4 may be performed, in whole or in part, by another system, software application, module, component or device apart from those specifically listed above.

At 402, the reflectance-based input device 261 of the electronic device 201 repeatedly performs a reflectance measuring routine. The reflectance measuring routine may be controlled by a diode controller 269 (FIG. 3) associated with the reflectance-based input device 261.

During the reflectance measuring routine, the infrared diodes 102a, 102b, 102c, 102d of the electronic device 201 are alternatingly activated by the diode controller 269. That is, the diode controller 269 may cause a pulse of infrared light to be alternatingly output from each of a plurality of infrared diodes 102a, 102b, 102c, 102d. Accordingly, during each cycle of the reflectance measuring routine, a pulse of infrared light may be output from each of the infrared diodes 102a, 102b, 102c, 102d.

In at least some embodiments, during the reflectance measuring routine, infrared light is only output from one of the infrared diodes 102a, 102b, 102c, 102d at any given time. That is, each infrared diode 102a, 102b, 102c, 102d may take its turn at outputting infrared light while the other infrared diodes 102a, 102b, 102c, 102d are idle. For example, during the reflectance measuring routine, infrared light may be first output from the first infrared diode 102a while the other infrared diodes 102b emit no light and then light may be output from another one of the infrared diodes, such as a second diode 102b while the other infrared diodes emit no light, and then light may be output from another one of the infrared diodes, such as the third diode 102c while the other infrared diodes emit no light, and then light may be output from another one of the infrared diodes, such as the fourth diode 102d while the other infrared diodes emit no light.

During the reflectance measuring routine, the amount of infrared light received at one or more of the photodiodes 104a, 104b during (or immediately after) each pulse is monitored. That is, the amount of light received at one or more of the photodiodes 104a, 104b as a result of the pulses is monitored and may be logged. By way of example, in some embodiments, the diode controller 269 may act as a receiver and may be connected to the photodiodes 104a, 104b. The diode controller 269 may receive signals from the photodiodes 104a, 104b which are representative of the light received by the photodiodes 104a, 104b. That is, the signals which are output by the photodiodes 104a, 104b and received at the diode controller 269 may be proportional to the amount of light received at the photodiodes 104a, 104b. In at least some embodiments, the diode controller 269 stores data representing the received light to a memory, such as in a cache. In some embodiments, the diode controller 269 may output data representing the received light to the processor 240 (FIG. 3) of the electronic device 201. In at least some such embodiments, the processor 240 may store the data in memory, such as a cache.

In at least some embodiments, at 402, the diode controller 269 and/or the processor 240 associates the received light from a photodiode 104a, 104b with the infrared diode 102a, 102b, 102c, 102d which caused that received light. That is, the diode controller 269 and/or the processor 240 track which infrared diode 102a, 102b, 102c, 102d was triggered immediately before the receipt of the light at the photodiode 104a, 104b and associate that infrared diode 102a, 102b, 102c, 102d with that received light. The diode controller 269 and/or the processor 240 do not meld the received light caused by all of the infrared diodes 102a, 102b, 102c, 102d. The diode controller 269 and/or the processor 240 handle the data regarding the received light so that an association between the received light and the infrared diode which caused that received light is maintained. For example, in some embodiments, when data representing the received light is stored, it is associated, in memory, with the infrared diode 102a, 102b, 102c, 102d which caused that received light.

By maintaining an association between the received light and the infrared diode 102a, 102b, 102c, 102d which caused that received light, the electronic device 201 is able to monitor how light reflectance in various regions of the sensing area 106 (FIGs. 1 and 2) changes over time. That is, the electronic device 201 monitors how reflected light caused by one of the infrared diodes 102a, 102b, 102c, 102d changes over time. The electronic device 201 may monitor such changes for each of the infrared diodes 102a, 102b, 102c, 102d.

In order to monitor changes in reflected light caused by each of the infrared diodes 102a, 102b, 102c, 102d, the reflectance measuring routine may be performed repeatedly. That is, the reflectance measuring routine may be performed more than once so that it is possible to assess reflectance changes in various regions of the electronic device 201. Accordingly, in at least some embodiments, each of the infrared diodes 102a, 102b, 102c, 102d may emit a plurality of pulses of light during 402 of FIG. 4.

Thus, at 402, the electronic device 201 effectively monitors changes in reflected light at various regions of the electronic device 201 over time.

While the example embodiment of FIGs 1 to 2 includes two photodiodes 104a, 104b, in at least some embodiments, at 402, during or after each pulse of light, the measurement from only one of the photodiodes 104a, 104b may be monitored and/or considered. The changes in reflected light received at the first photodiode 104a and the second photodiode 104b may demonstrate a high degree of correlation. That is, the changes in reflected light received at the first photodiode 104a and the second photodiode 104b are generally related. Accordingly, in at least some embodiments, after a pulse of light is emitted at an infrared diode 102a, 102b, 102c, 102d, the received light at one of the photodiodes 104a, 104b may be monitored and/or considered and the received light at another one of the photodiodes 104a, 104b may be ignored (i.e. either not monitored or not considered or both).

In at least some embodiments, the photodiodes 104a, 104b which is used for the monitoring will depend on the infrared diode 102a, 102b, 102c, 102d which emitted the pulse of infrared light. For example, in some embodiments, the photodiode 104a, 104b which is closest to the infrared diode 102a, 102b, 102c, 102d which emitted the light will be used to measure the reflected light. For example, after light is emitted from a first infrared diode 102a, the light received at the photodiode 104a, 104b which is closest to that infrared diode 102a may be considered and/or monitored (e.g. in the example embodiment of FIG. 1 this is the first photodiode 104a) and the light received at the other photodiode may be ignored (e.g. in the example embodiment of FIG. 1 this is the second photodiode 104b). Similarly, after light is emitted from a second infrared diode 102b, the light received at the photodiode 104a, 104b which is closest to that infrared diode 102b may be considered and/or monitored (e.g. in the example embodiment of FIG. 1 this is the second photodiode 104b) and the light received at the other photodiode may be ignored (e.g. in the example embodiment of FIG. 1 this is the first photodiode 104a). Similarly, after light is emitted from a third infrared diode 102c, the light received at the photodiode 104a, 104b which is closest to that infrared diode 102c may be considered and/or monitored (e.g. in the example embodiment of FIG. 1 this is the second photodiode 104b) and the light received at the other photodiode may be ignored (e.g. in the example embodiment of FIG. 1 this is the first photodiode 104a). Similarly, after light is emitted from a fourth infrared diode 102d, the light received at the photodiode 104a, 104b which is closest to that infrared diode 102d may be considered and/or monitored (e.g. in the example embodiment of FIG. 1 this is the first photodiode 104a) and the light received at the other photodiode may be ignored (e.g. in the example embodiment of FIG. 1 this is the second photodiode 104b).

Referring still to FIG. 4, after the reflectance measuring routine has been repeatedly performed, the electronic device 201 may attempt to determine, at 404, based on the infrared light received at one or more photodiodes 104a, 104b as a result of the pulses from the infrared diodes, whether one or more predetermined gesture has been performed.

When an object, such as a hand 506 (FIG. 5) is moved from a position in which it is far away from one of the infrared diodes 102a, 102b, 102c, 102d to a position in which it is closer to that infrared diode 102a, 102b, 102c, 102d, the amount of reflected light caused by that infrared diode 102a, 102b, 102c, 102d tends to increase. Accordingly, in at least some embodiments, changes in reflected light emitted from each of the infrared diodes 102a, 102b, 102c, 102d may be used to model the movement of the object, such as the hand 506 (FIG. 5). In at least some embodiments, the predetermined gesture which may be identified from the reflected light received at the photodiodes 104a, 104b may be a contactless gesture. That is, the predetermined gesture may be a gesture which does not require contact with the electronic device 201.

Example gestures which may be detected and methods which may be used to detect such gestures will be described in greater detail below with reference to FIGs. 5 to 13.

404 may, in some embodiments, be performed by a processor 240 (FIG. 3) of the electronic device 201. For example, one or more software application or module in memory of the electronic device 201 may contain computer executable instructions which, when executed, cause the processor 240 to determine whether a predetermined gesture has occurred. For example, in some embodiments, the contactless gesture interpretation module 297 (FIG. 3) may be configured to cause the processor 240 to determine, based on the light received at one or more photodiode 104a, 104b, whether a predetermined gesture has been performed.

In at least some embodiments, if the electronic device 201 determines that no predetermined gesture has occurred (at 404), then the electronic device 201 may continue, at 408, to perform the reflectance measuring routine. That is, the electronic device 201 may continue to alternately output light from the infrared diodes 102a, 102b, 102c, 102d and to measure the reflected light received at one or more of the photodiodes 104a, 104b. Then, in at least some embodiments, after the reflectance measuring routine has been performed at 408, the electronic device 201 may again (at 404) attempt to determine whether a predetermined gesture has been performed.

If, however, at 404 the electronic device 201 determines that a predetermined gesture has occurred, then at 406, the electronic device 201 may perform a function associated with that predetermined gesture. The function which is performed may depend on the specific gesture which is detected. That is, different gestures may be associated with different functions.

As noted above, in at least some embodiments, the method 400 of FIG. 4 may be performed by an electronic device 201, such as the electronic device 201 of FIG. 3. However, in other example embodiments, the method 400 of FIG. 4 may be provided collectively by a plurality of electronic devices. For example, in some embodiments, the method 400 may be provided collectively by a gesture companion device 1400 (FIG. 14) and another electronic device which is associated with the gesture companion device. The gesture companion device 1400 (FIG. 14) may act as an input device (e.g. a wireless external peripheral) for the other electronic device. The gesture companion device may receive a reflectance-based input via a reflectance-based input device 261 (which may be of the type described above) and generate an output based on the reflectance-based input received at the reflectance-based input device 261. However, the other electronic device (which may be an electronic device 201 of the type described above with reference to FIG. 3) may receive the output generated by gesture companion device 1400 and may perform an appropriate function as a result of the reflectance-based input.

For example, in at least some embodiments, 402 and 408 of FIG. 4 may be performed by the gesture companion device and 406 of FIG. 4 may be performed by another electronic device. 404 may, in some embodiments, be performed by the gesture companion device. That is, in at least some embodiments, the gesture companion device may determine whether a predetermined gesture has been performed in the manner described herein. If the gesture companion device determines that a predetermined gesture has been performed, then it may inform the other electronic device that such a gesture has been performed and/or provide an instruction or command to the other electronic device. In other embodiments, 404 may be performed by the other electronic device. That is, the gesture companion device may perform the reflectance measuring routine (at 402 and 408) but may output the raw data regarding reflected light to the other electronic device. The other electronic device may then analyze the reflected light measurements in the manner described herein to determine whether a predetermined gesture has been performed.

**Vertical Gesture Detection**

In at least some embodiments, the electronic device 201 may be configured to detect a vertical gesture. Characteristics of such vertical gestures and methods of detecting such gestures will now be described.

Referring to FIG. 5, a side view of the electronic device 201 of FIGs. 1 to 3 is illustrated. In the example embodiment of FIG. 5, a hand 506 is located on the sensing side 112 of the electronic device 201. The hand 506 is separated from the electronic device 201 and, in the example embodiment of FIG. 5, does not contact the electronic device 201. That is, there is a gap between the hand 506 and the electronic device 201 since the hand 506 is held in spaced relation to the electronic device 201. The hand 506 is held within the sensing area 106 (FIGs. 1 and 2) of the reflectance-based input device 261 (FIG. 3). The sensing area 106 has not been illustrated in FIG. 5 to provide greater readability of FIG. 5. However, the sensing area 106 is illustrated in FIG. 1 and FIG. 2 and is discussed in greater detail above with reference to those figures.

A vertical gesture is a gesture in which a hand 506 (or other object) is moved within the sensing area 106 (FIGs. 1 and 2) in a direction 502, 504 which is substantially perpendicular to a plane 110 formed by the infrared diodes 102a, 102b, 102c, 102d (FIGs. 1 and 2). In at least some example embodiments, a vertical gesture occurs when a hand 506 (or other object) is moved in a direction which is substantially perpendicular to a front face of the electronic device 201 (the front face of the electronic device may be a face having a display 204). In some embodiments, a vertical gesture occurs when either the hand 506 (or other object) is brought closer to all of the infrared diodes 102a, 102b, 102c, 102d (in which case an "inward" vertical gesture has occurred), or the hand 506 (or other object) is brought further away from all of the infrared diodes 102a, 102b, 102c, 102d (in which case an "outward" vertical gesture has occurred).

Accordingly, a vertical gesture may be an inward vertical gesture, which may be defined as a vertical gesture in which the hand is moved within the sensing area 106 (FIG. 1 and 2) to be closer to the electronic device 201 (and thus closer to the infrared diodes 102a, 102b, 102c, 102d and the photodiodes 104a, 104b). That is, an inward vertical gesture occurs when the hand 506 is moved in a gap-reducing direction 502. The gap-reducing direction 502 is a direction which tends to decrease the gap between the hand 506 and the electronic device 201. Where the electronic device 201 is held flat and has a sensing side 112 which is on a top side of the electronic device 201, the gap-reducing direction 502 is a downward direction. That is, when the electronic device 201 is placed in the orientation of FIG. 5, the inward vertical gesture occurs when the hand 506 is moved vertically downward.

Similarly, a vertical gesture may be an outward vertical gesture, which me be defined as a vertical gesture in which the hand 506 is moved within the sensing area 106 (FIG. 1 and 2) to be further away from the electronic device 201 (and thus further from the infrared diodes and the photodiodes). That is, an outward vertical gesture may occur when the hand 506 is moved in a gap-widening direction 504. The gap-widening direction 504 is a direction which tends to increase the gap between the hand 506 and the electronic device 201. Where the electronic device 201 is held flat and has a sensing side 112 which is on a top side of the electronic device 201, the gap-reducing direction 502 is an upward direction. That is, when the electronic device 201 is placed in the orientation of FIG. 5, the inward vertical gesture occurs when the hand 506 is moved vertically upward.

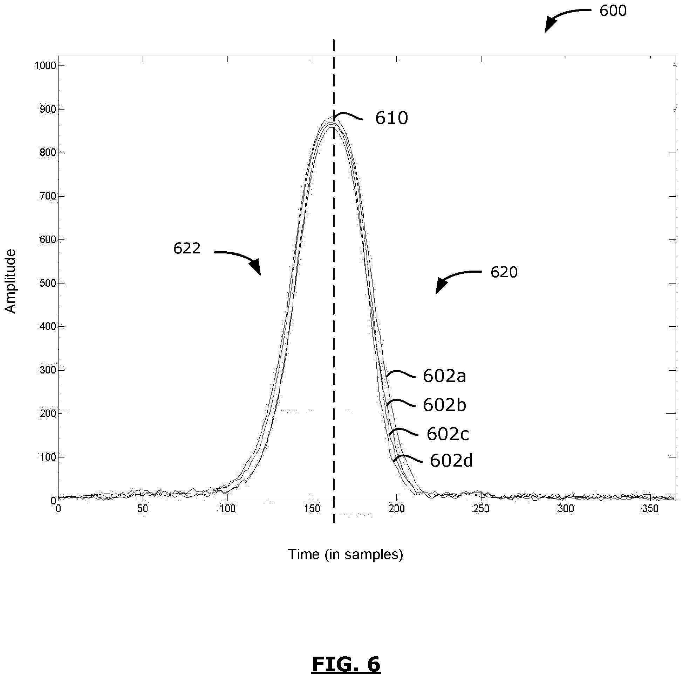

Referring now to FIG. 6, an example photodiode output 600 is shown. The example photodiode output 600 illustrates the light received at one or more of the photodiodes 104a, 104b (FIGs 1 to 3) as a result of pulses of light output from each of the infrared diodes 102a, 102b, 102c, 102d (FIGs. 1 to 3). That is, each of the infrared diodes 102a, 102b, 102c, 102d (FIGs. 1 to 3) alternatingly outputs a pulse of infrared light. The amount of light received at one or more of the photodiodes 104a, 104b may be monitored during or immediately following the pulse. That is, during or immediately after each infrared diode 102a, 102b, 102c, 102d (FIGs. 1 to 3) outputs a pulse of infrared light, the amount of light received at one or more of the photodiodes 104a, 104b as a result of each pulse may be determined.

The reflected light which is associated with each infrared diode 102a, 102b, 102c, 102d (FIGs. 1 to 3) may be separated. That is, the reflected light which is received at the photodiodes 104a, 104b may be associated with the infrared diode 102a, 102b, 102c, 102d which emitted that light (i.e. the infrared diode 102a, 102b, 102c, 102d which emitted a pulse of light during or immediately before the light was received at the photodiode 104a, 104b).

Accordingly, the example photodiode output 600 includes a separate amplitude curve 602a, 602b, 602c, 602d for each of the infrared diodes 102a, 102b, 102c, 102d. A first amplitude curve 602a indicates the amount of light received over time at a first infrared diode 102a, a second amplitude curve 602b indicates the amount of light received over time at a second infrared diode 102b, a third amplitude curve 602c indicates the amount of light received over time at a third infrared diode 102c and a fourth amplitude curve 602d indicates the amount of light received over time at a fourth infrared diode 102d. Each of the amplitude curves 602a, 602b, 602c, 602d represents the light received at one of the photodiodes 104a, 104b. The photodiode 104a, 104b associated with the amplitude curves may not be the same for all of the amplitude curves. In some embodiments, only the light received at the photodiode 104a, 104b which is closest to the infrared diode 102a, 102b, 102c, 102d will be used.

In some embodiments, amplitude curves 602a, 602b, 602c, 602d for each of the infrared diodes 102a, 102b, 102c, 102d may, for example, be obtained at 402 or 404 of the method 400 of FIG. 4 based on the infrared light received during or after the pulses of light emitted from each of the infrared diodes. In at least some embodiments, the amplitude curves 602a, 602b, 602c, 602d may be used to determine whether a predetermined gesture has been performed.

The example photodiode output of FIG. 6 illustrates a photodiode output for a vertical gesture. That is, the photodiode output of FIG. 6 illustrates a photodiode output for a gesture of the type described above with reference to FIG. 5. In the example embodiment, the vertical gesture includes both an inward vertical gesture component 622 and an outward vertical gesture component 620. During the inward vertical gesture component 622, an inward vertical gesture of the type described above with reference to FIG. 5 is performed. During the outward vertical gesture component 620, an outward vertical gesture of the type described above with reference to FIG. 5 is performed.

As illustrated in FIG. 6, when a vertical gesture is performed, the amplitudes of received light associated with each of the infrared diodes 102a, 102b, 102c, 102d (FIGs. 1 to 3) tend to experience similar changes. That is, during the vertical gesture, the amplitude of received light tends to rise and fall together for all of the infrared diodes 102a, 102b, 102c, 102d. When the amplitude of received light from one of the infrared diodes 102a, 102b, 102c, 102d increases, the amplitude of received light from the other infrared diodes 102a, 102b, 102c, 102d also increases. That is, the amplitude curves 602a, 602b, 602c, 602d experience the same trends at the same times, rising and/or falling together.

During the inward vertical gesture (which is represented by the inward vertical gesture component 622), the amplitudes of received light associated with all of the infrared diodes 102a, 102b, 102c, 102d increase at the same time. That is, during the inward vertical gesture, the amplitudes of received light associated with all of the infrared diodes 102a, 102b, 102c, 102d exhibit a trend in which such amplitudes increase at the same time or approximately the same time.

During the outward vertical gesture (which is represented by the outward vertical gesture component 620), the amplitudes of received light associated with all of the infrared diodes 102a, 102b, 102c, 102d decrease at the same time. That is, during the outward vertical gesture, the amplitudes of received light associated with all of the infrared diodes 102a, 102b, 102c, 102d exhibit a trend in which such amplitudes decrease at the same time or approximately the same time. The outward vertical gesture component 620 and the inward vertical gesture component 622 are separated at a point 610 at which the amplitude curves 602a, 602b, 602c, 602d experience a maximum.

Thus, in at least some embodiments, at 404 of FIG. 4, the electronic device 201 may determine whether a vertical gesture has occurred by determining whether the light received at the photodiodes 104a, 104b exhibits the characteristics described above with reference to FIGs. 5 and 6. For example, in at least some embodiments, the electronic device 201 may be configured to determine whether the amplitudes of received light associated with each of the infrared diodes 102a, 102b, 102c, 102d experiences the same trends at the same times. That is, the electronic device 201 may determine whether the amplitude of light received at the one or more photodiodes exhibits the same trend at the same time for each infrared diode. For example, in at least some embodiments, the electronic device 201 may be configured to determine whether changes in the amplitudes of received light associated with each infrared diode 102a, 102b, 102c, 102d experience the same trend at the same time. For example, the electronic device 201 may determine whether the received light associated with all of the infrared diodes 102a, 102b, 102c, 102d tends to increase at the same time and/or whether the received light associated with all of the infrared diodes 102a, 102b, 102c, 102d tends to decrease at the same time. In at least some embodiments, the electronic device 201 may determine whether the amplitude curves 602a, 602b, 602c, 602d associated with each of the infrared diodes 102a, 102b, 102c, 102d are aligned. If such criterion is met, then the electronic device 201 may determine that a vertical gesture has been performed.

In at least some embodiments, at 404 of FIG. 4, the electronic device 201 may determine whether an inward vertical gesture and/or an outward vertical gesture has been performed. The inward vertical gesture and outward vertical gesture are described above with reference to FIG. 5. In at least some embodiments, the electronic device 201 may determine whether an inward vertical gesture has been performed by determining whether the amplitudes of received light associated with each of the infrared diodes 102a, 102b, 102c, 102d have corresponding periods of increasing amplitudes of received light. That is, the electronic device 201 may determine whether the amount of received light associated with each infrared diode has exhibited a trend in which the amplitude of light received increased for all of the infrared diodes. If so, then the electronic device 201 may determine that an inward vertical gesture has been performed.

In at least some embodiments, the electronic device 201 may determine whether an outward vertical gesture has been performed by determining whether the amplitudes of received light associated with each of the infrared diodes 102a, 102b, 102c, 102d have corresponding periods of decreasing amplitudes of received light. That is, the electronic device 201 may determine whether the amount of received light associated with each infrared diode has exhibited a trend in which the amplitude of light received decreased for all of the infrared diodes. If so, then the electronic device 201 may determine that an outward vertical gesture has been performed.

It will be appreciated that, to account for noise and other interference, the trends in received light may need to exist for at least a predetermined period of time and/or the amplitudes may need to change by at least a predetermined amplitude threshold, before the electronic device 201 will determine that a gesture has been performed. For example, the electronic device 201 may ignore minor fluctuations in the amplitudes, since such minor fluctuations may be the result of noise. Accordingly, the corresponding periods which result in the electronic device 201 determining that an inward or outward vertical gesture has been performed may be required to be of a predetermined duration and/or to exhibit a predetermined change in amplitude.

In at least some embodiments, when the electronic device 201 determines that a vertical gesture, inward vertical gesture and/or outward vertical gesture has been performed, then the electronic device 201 may (at 406 of FIG. 4), perform a predetermined function which corresponds to that gesture. In at least some embodiments, the predetermined function associated with a vertical gesture may be a zoom function. For example, in at least some embodiments, if the electronic device 201 determines that an inward vertical gesture has been performed then it may perform a zoom-in function (e.g. by zooming in on a displayed document, screen or page) and if the electronic device 201 determines that an outward vertical gesture has been performed, then it may perform a zoom-out function (e.g. by zooming out on a displayed document, screen or page). Accordingly, in at least some example embodiments, the vertical gesture may be referred to as a zoom gesture.

**Horizontal Gesture Detection**

In at least some embodiments, the electronic device 201 may be configured to detect a horizontal gesture. Characteristics of such horizontal gestures and methods of detecting such gestures will now be described.

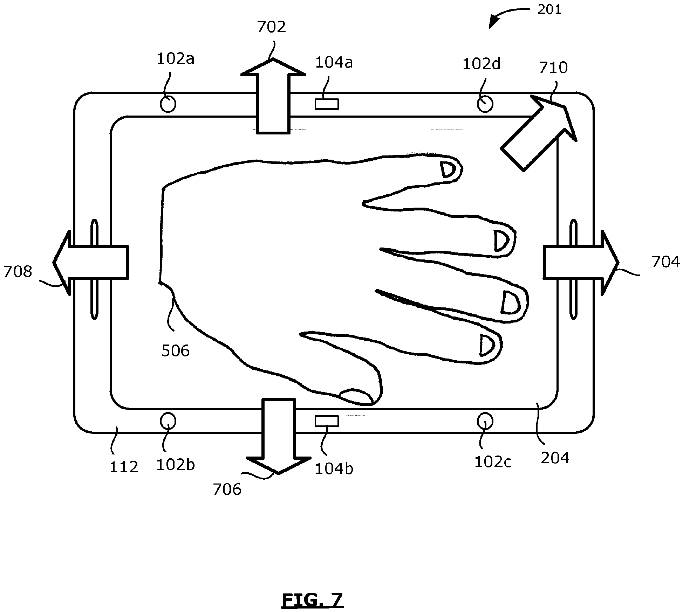

Referring to FIG. 7, a top view of the electronic device 201 is illustrated. In the example embodiment of FIG. 7, a hand 506 is located on the sensing side 112 of the electronic device 201. The hand 506 is separated from the electronic device 201 and, in the example embodiment of FIG. 7, does not contact the electronic device 201. That is, there is a gap between the hand 506 and the electronic device 201 since the hand 506 is held in spaced relation to the electronic device 201. The hand 506 is held within the sensing area 106 (FIGs. 1 and 2) of the reflectance-based input device 261 (FIG. 3). The sensing area 106 has not been illustrated in FIG. 7 to provide greater readability of FIG. 7. However, the sensing area 106 is illustrated in FIG. 1 and FIG. 2 and is discussed in greater detail above with reference to those figures.

EP 2 626 769 A1

A horizontal gesture is a gesture in which a hand 506, (or other object) is moved within the sensing area (FIGs. 1 and 2) in a direction 702, 704, 706, 708, 710 which is substantially parallel to a plane 110 (FIG. 2 and 5) formed by the infrared diodes 102a, 102b, 102c, 102d. In at least some example embodiments, a horizontal gesture occurs when a hand 506 (or other object) is moved in a direction which is substantially perpendicular to a front face of the electronic device 201 (the front face of the electronic device may be the face having the display 204). A horizontal gesture may also be referred to as a swipe gesture.

While, in some embodiments, a horizontal gesture may be performed in any direction which is substantially parallel to the plane 110 (FIG. 2 and 5) and/or the display 204, a number of example directions 702, 704, 706, 708, 710 in which an object, such as a hand 506, may be moved in order to perform a horizontal gesture are illustrated in FIG. 7. These directions include a first direction 702, second direction 704, third direction 706, and fourth direction which are each parallel to a side of the electronic device 201. The first direction 702 and third direction 706 are opposite one another and are perpendicular to the second direction 704 and the fourth direction 708. The second direction 704 and fourth direction 708 are opposite one another.

A fifth direction 710 is also illustrated. The fifth direction 710 is substantially parallel to the plane 110 (FIG. 2 and 5) and the display 204 but is not parallel to the top side, left side, right side or bottom side of the electronic device 201. Thus, the fifth direction 710 illustrates that, in at least some embodiments, the directions need not be aligned with the electronic device 201.

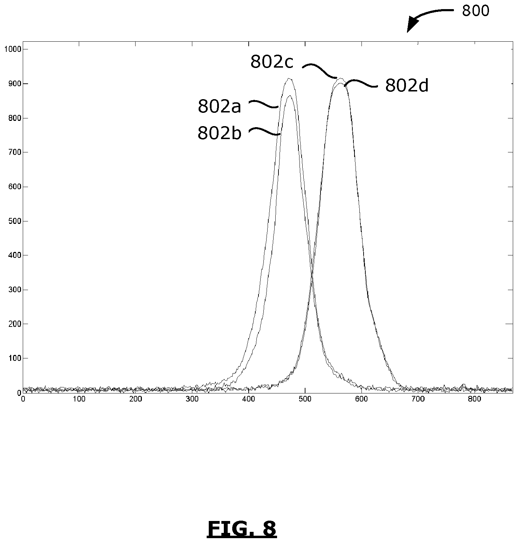

Referring now to FIG. 8, an example photodiode output 800 is shown. The example photodiode output 800 illustrates the light received at one or more of the photodiodes 104a, 104b as a result of pulses output from each of the infrared diodes 102a, 102b, 102c, 102d. That is, each of the infrared diodes 102a, 102b, 102c, 102d alternately outputs a pulse of infrared light. The amount of light received at one or more of the photodiodes 104a, 104b may be monitored during or immediately following the pulse. That is, during or immediately after each pulse of infrared light, the amount of light received at one or more of the photodiodes 104a, 104b as a result of each pulse may be determined.

As discussed above with reference to FIG. 6, the reflected light which is associated with each infrared diode 102a, 102b, 102c, 102d may be separated. That is, the reflected light which is received at the photodiodes 104a, 104b may be associated with the infrared diode 102a, 102b, 102c, 102d which emitted that light (i.e. the infrared diode 102a, 102b, 102c, 102d which emitted a pulse of light during or immediately before the light was received at the photodiode 104a, 104b).

Accordingly, the example photodiode output 800 includes a separate amplitude curve 802a, 802b, 802c, 802d for each of the infrared diodes 102a, 102b, 102c, 102d. A first amplitude curve 802a indicates the amount of light received over time at a first infrared diode 102a, a second amplitude curve 802b indicates the amount of light received over time at a second infrared diode 102b, a third amplitude curve 802c indicates the amount of light received over time at a third infrared diode 102c and a fourth amplitude curve 802d indicates the amount of light received over time at a fourth infrared diode 102d. Each of the amplitude curves 802a, 802b, 802c, 802d represents the light received at one of the photodiodes 104a, 104b. The photodiode 104a, 104b associated with the amplitude curves may not be the same for all of the amplitude curves. In some embodiments, only the light received at the photodiode 104a, 104b which is closest to the infrared diode 102a, 102b, 102c, 102d will be used to measure light emitted from that infrared diode.

In some embodiments, amplitude curves 802a, 802b, 802c, 802d for each of the infrared diodes 102a, 102b, 102c, 102d may, for example, be obtained (at 402 or 404 of the method 400 of FIG. 4) based on the infrared light received during or after the pulses of light emitted from each of the infrared diodes. In at least some embodiments, the amplitude curves 802a, 802b, 802c, 802d may be used to determine whether a predetermined gesture has been performed.

The example photodiode output of FIG. 8 illustrates a photodiode output for a horizontal gesture. That is, the photodiode output of FIG. 8 illustrates a photodiode output for a gesture of the type described above with reference to FIG. 7.

As illustrated in FIG. 8, when a horizontal gesture is performed, the amplitudes of received light associated with each of the infrared diodes 102a, 102b, 102c, 102d tends to experience an amplitude spike, but the amplitude does not spike at the same time for all of the infrared diodes 102a, 102b, 102c, 102d. That is, when a horizontal gesture is performed, the photodiode output associated with each of the infrared diodes 102a, 102b, 102c, 102d may experience a spike (i.e. a temporary increase in magnitude) but the spike is offset for two or more of the infrared diodes 102a, 102b, 102c, 102d. That is, unlike in the vertical gesture of FIG. 6, in which the spike was realized at the same time for all infrared diodes, for the horizontal gesture, the spike is observed at different times for at least two of the infrared diodes. That is, when a horizontal gesture is performed, at least two of the amplitude curves 802a, 802b, 802c, 802d will have maximums at different times. More particularly, in some embodiments two or more of the amplitude curves exhibit a delay between one another which exceeds a predetermined threshold.

Accordingly, in at least some embodiments, at 404 of FIG. 4, the electronic device 201 may determine whether a horizontal gesture has occurred by determining whether the light received at the photodiodes exhibits the characteristics described above with reference to FIGs. 7 and 8. For example, in at least some embodiments, the electronic device 201 may be configured to determine whether the amplitudes of received light associated with each of the infrared diodes 102a, 102b, 102c, 102d experiences a spike and whether the spikes for at least two of the infrared diodes 102a, 102b, 102c, 102d occur at different points in time. If so, then the electronic device 201 may determine that a horizontal gesture has been performed.

In at least some embodiments, at 404 of FIG. 4, the electronic device 201 may determine whether the amplitude curves 802a, 802b, 802c, 802d associated with each of the infrared diodes 102a, 102b, 102c, 102d include a spike and whether the spike for at least two of the amplitude curves is offset. That is, the electronic device 201 may obtain an amplitude curve 802a, 802b, 802c, 802d for each of the infrared diodes based on the monitored infrared light received. Each amplitude curve represents the amplitude of received light associated with one of the infrared diodes over time. Next, the electronic device 201 may determine whether the amplitude curves for the infrared diodes each include a spike and whether the spike for at least two of the infrared diodes are offset from one another (i.e. whether at least two of the amplitude curves experience maximums at different times). That is, the electronic device 201 may determine whether two or more of the amplitude curves have a delay between them which is greater than a predetermined threshold. If so, the electronic device 201 may determine that the horizontal gesture has been performed.

As noted above with reference to FIG. 6, in at least some embodiments, to account for noise and other interference, the trends in received light may need to exist for at least a predetermined period of time and/or the amplitudes may need to change by at least a predetermined amplitude threshold, before the electronic device 201 will determine that a gesture has been performed. In at least some embodiments, the spikes which are observed may have a predetermined minimum duration, or they will be ignored.

In at least some embodiments, when the electronic device 201 determines that a horizontal gesture (also known as a swipe gesture) has been performed, the electronic device 201 may (at 406 of FIG. 4) perform a predetermined function which corresponds to that gesture. In at least some embodiments, the predetermined function may be a scrolling function. A scrolling function is a function in which displayed text or graphics are moved in a particular direction on the display 204. The direction may be associated with the direction 702, 704, 706, 708, 710 (FIG. 7) of the horizontal gesture. Accordingly, in at least some embodiments, the function which is performed may depend on the direction of the gesture.

Thus, methods of determining the direction associated with the performed gesture will now be discussed. In at least some embodiments, such methods may be performed by the electronic device 201 when determining whether a predetermined gesture has been performed at 404 of FIG. 4.

## Direction Determination

In at least some embodiments, the electronic device 201 may determine a general direction of a horizontal gesture by examining the order of peaks in the amplitude curves for the various infrared diodes. That is, the infrared diode associated with the first curve to experience a peak may indicate the location where the gesture began. That is, the electronic device 201 may determine that the gesture was initiated at the location associated with that infrared diode. Similarly, the infrared diode associated with the last curve to experience a peak may indicate the location where the gesture ends. That is, the electronic device 201 may determine that the gesture was initiated at the location associated with that infrared diode.

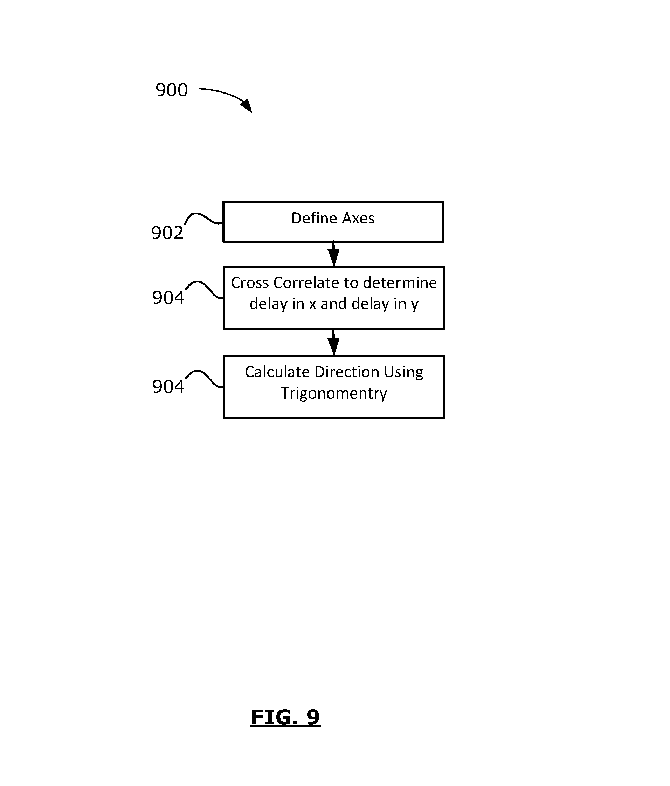

In at least some embodiments, it may be necessary or desirable to obtain a more specific direction of movement. In at least some such embodiments, the electronic device 201 may determine an angle of the direction of movement. Referring now to FIG. 9, an example method 900 of determining the direction of a horizontal gesture is illustrated. The method may be performed by the electronic device 201 when determining whether a predetermined gesture has been performed at 404 of FIG. 4. In at least some embodiments, the method 900 is performed if the electronic device determines that a horizontal gesture has been performed.

In at least some embodiments, the angle of the direction of movement may be determined based on the delay in the amplitude curves 802a, 802b, 80c, 80d (FIG. 8) associated with the infrared diodes. For example, in at least some embodiments, at 902, the electronic device 201 may define perpendicular x and y axes based on the layout of the infrared diodes (the x and y axes may, in some embodiments, be predefined). By way of example, in the orientation of FIG. 7, the first infrared diode 102a and the second infrared diode 102b may define a y-axis and the second infrared diode 102b and the third infrared diode 102c may define an x axis.

In at least some such embodiments, the electronic device 201 may determine the angle of movement by cross correlating the amplitude curves to determine a delay in the x direction and a delay in the y direction (at 902). Accordingly, in at least some embodiments, the electronic device 201 may perform a cross correlation on the amplitude curves 802a, 802b, 802c, 802d themselves. In other embodiments, the electronic device 201 may obtain derivatives of the amplitude curves and may perform the cross correlation on the derivatives. The delay in the x direction may be calculated based on both sets of infrared diodes which are oriented in the x direction. For example, the delay in the x direction may be calculated based on the delay between the curve associated with the first infrared diode 102a and the curve associated with the fourth infrared diode 102d and also based on the delay between the curve associated with the second infrared diode 102b and the curve associated with the third infrared diode 102c. For example, the delay in the x direction may be calculated as an average of these two delays.

Similarly, the delay in the y direction may be calculated based on both sets of infrared diodes which are oriented in the y direction. For example, the delay in the y direction may be calculated based on the delay between the curve associated with the first infrared diode 102a and the second infrared diode 102b and based on the delay between the curve associated with the third infrared diode 102c and the curve associated with the fourth infrared diode 102d. For example, the delay in the y direction may be calculated as an average of these two delays.

Based on the delays in the x direction and the delays in the y direction, the electronic device 201 may, at 904, calculate the direction of movement. That is, the electronic device 201 may use trigonometry on the delays to determine the angle of movement of the gesture. That is, a trigonometric function may be applied to the delay in the x direction and the delay in the y direction. For example, in some embodiments, the angle of movement, $\varphi$, may be determined as:

$$\varphi = -arctan\left(\frac{delay\ in\ y}{delay\ in\ x}\right)$$

### Velocity Determination

In at least some embodiments, if a horizontal gesture is performed, the electronic device 201 may determine a velocity associated with the horizontal gesture. The velocity may, in at least some embodiments, affect the function which is performed by the electronic device 201 in response to the gesture. For example, in some embodiments where a horizontal gesture is associated with a scrolling function, the velocity may affect the amount, rate or degree of scrolling which is applied by the electronic device 201 in response to the horizontal gesture.

In at least some embodiments, the velocity may be calculated based on the delay in the x direction and the delay in the y direction. The delay in the x direction and the delay in the y direction may be determined in the manner described above with reference to FIG. 9.

In some embodiments, the velocity may also be calculated based on the distances between the infrared diodes 102a, 102b, 102c, 102d.

Accordingly, in at least some embodiments, x and y velocity components may be determined as:

$$v_x = \frac{d_x}{delay\ in\ x}$$

$$v_y = \frac{d_y}{delay\ in\ y}$$

where $d_x$ is a distance between the pairs of infrared diodes oriented in the x direction and $d_y$ is a distance between the pairs of infrared diodes oriented in the y direction.

In at least some embodiments, x and y velocity components may be combined to yield an overall velocity. For example, an overall velocity may be calculated as:

$$v = \sqrt{v_x^2 + v_y^2}$$

### Differentiating between the Horizontal Gesture and the Vertical Gesture

While the discussion of FIGs. 5 and 6 generally referred to embodiments in which a vertical gesture may be detected and the discussion of FIGs. 7 to 9 referred to embodiments in which a horizontal gesture may be detected, in at least some embodiments, the electronic device 201 may be configured to detect both of these types of gestures.

As discussed previously, the amplitude curves for the infrared diodes when a vertical gesture is performed will have no delay, or very little delay. In contrast, when a horizontal gesture is performed, some of the amplitude curves have a relatively large delay (i.e. they experience peaks at different times). Accordingly, in at least some embodiments, the electronic device 201 may be configured to determine whether a horizontal gesture has been performed and also to determine whether a vertical gesture has been performed.

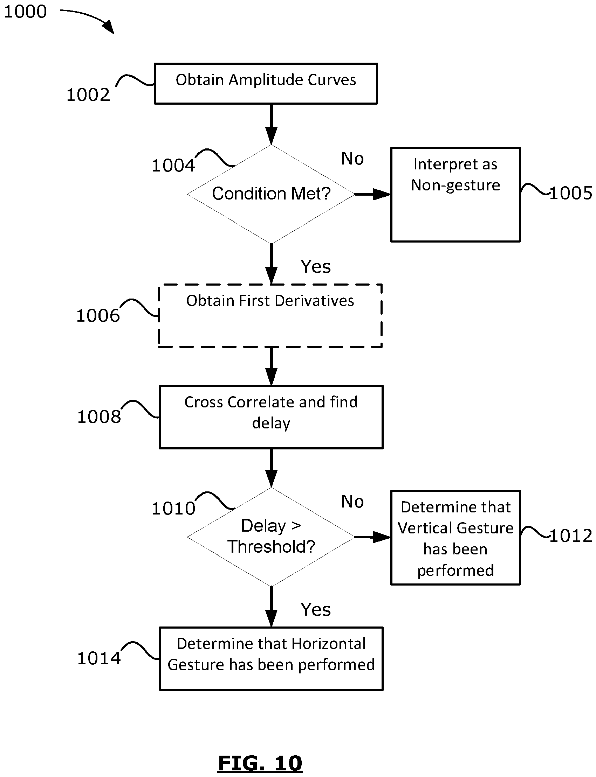

Referring now to FIG. 10, one such example method 1000 is illustrated in flowchart form. The method 1000 may be performed by the electronic device 201 at 404 of FIG. 4. In some embodiments, the method 1000 may be performed by a gesture companion device 1400 (FIG. 14) at 404 of FIG. 4.

In some embodiments, at 1002, an amplitude curve for each of the infrared diodes 102a, 102b, 102c, 102d may be obtained based on the reflected light which is observed at 402 of FIG. 4. Each amplitude curve may identify the amplitude of light measured at a photodiode when a specific one of the infrared diodes was triggered.

Next, at 1004, the electronic device 201 may determine whether one or more predetermined conditions is met. In the embodiment of FIG. 10, the electronic device 201 determines at 1004 whether one or more of the curves include an amplitude of light which is greater than a predetermined threshold. However, other predetermined conditions could be used in other embodiments. The predetermined conditions which are used at 1004 may be predetermined conditions which are considered to be indicative of a gesture having been performed. In at least some embodiments, a predetermined condition may require that one or more of the amplitude curves include a spike (i.e. a maximum). In at least some embodiments, a predetermined condition may require that all of the amplitude curves include a spike. If the conditions are not met, then at 1005, the electronic device 201 may interpret the amplitude curves as representing a non-gesture. That is, the electronic device 201 may determine that a gesture has not been performed.

In at least some embodiments, if the predetermined condition(s) is/are satisfied, then at 1006, the electronic device 201 may obtain a first derivative curve for each of the amplitude curves.

Next, at 1008, in some embodiments, the electronic device 201 may perform a cross correlation based on the amplitude curves and may find one or more delays associated with the amplitude curves. In at least some embodiments, the cross correlation may be performed on the amplitude curves. However, in at least some embodiments, the cross correlation may be performed on the first derivatives. The delay represents the elapsed time between the spikes and/or maximums in the amplitude curves.

Next, at 1010, the electronic device 201 determines whether the delay is greater than a predetermined threshold. If the delay is not greater than the predetermined threshold, then at 1012, the electronic device 201 determines that a vertical gesture has been performed.

If, however, the delay is less than the threshold, then at 1014 the electronic device determines that a horizontal gesture has been performed.

## Rotational Gestures

In at least some embodiments, the electronic device 201 may be configured to recognize and interpret one or more rotational gesture. A rotational gesture is a gesture in which an object, such as a hand 506 is rotated relative to the electronic device and/or the plane 110 (FIG. 2) formed by the infrared diodes 102a, 102b, 102c, 102d (FIGs. 1 and 2) of the electronic device.

The rotation may be a rotation about an x axis and/or a y axis. These axes may be defined based on the layout of the infrared diodes. For example, a y axis 1106 may be defined to be parallel to a line extending through the first infrared diode 102a and the second infrared diode 102b and to a line extending through the fourth diode 102d and the third diode 102c.

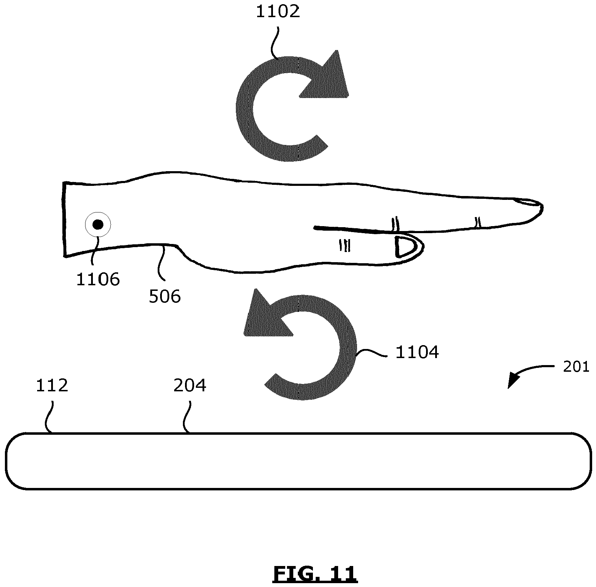

Referring to FIG. 11, which illustrates a side view of the electronic device, an example y axis 1106 and example rotation about the y axis in forward and reverse directions 1102, 1104 are illustrated. The y axis 1106 is located on the hand 506 and may be located along a point of rotation of the hand.

Similarly, an x axis 1206 may be defined to be parallel to a line extending through the second infrared diode 102b and the third infrared diode 102c and to a line extending through the first diode 102a and the fourth diode 102d.

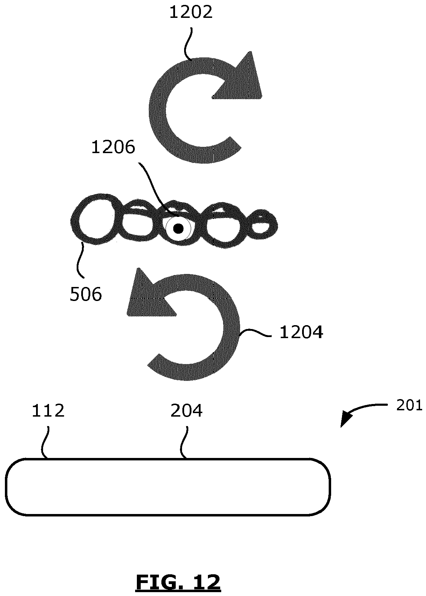

Referring to FIG. 12, which illustrates a front view of the electronic device, an example x axis 1206 and example rotation about the x axis in forward and reverse directions 1202, 1204 are illustrated. The y axis 1206 is located on the hand 506 and may be located along a point of rotation of the hand, such as the wrist.

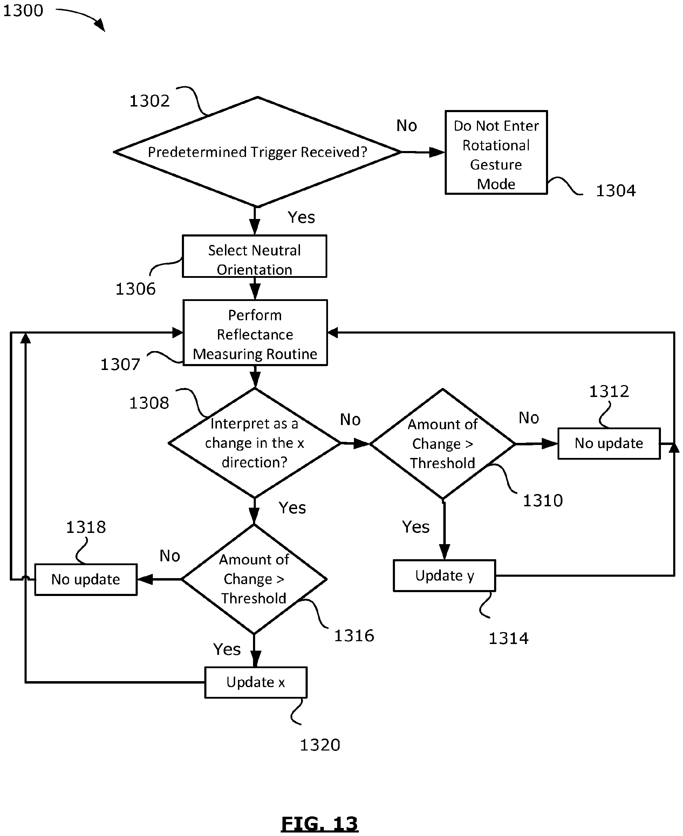

Referring now to FIG. 13, an example method 1300 for interpreting a rotational gesture is illustrated in flowchart form. In some embodiments, the method 1300 may be performed at 404 of FIG. 4.

The method 1300 includes features which may be provided by an electronic device 201, such as the electronic device 201 of FIG. 3. More particularly, one or more application or module associated with the electronic device 201, such as the contactless gesture interpretation module 297 (FIG. 3), may contain processor readable instructions for causing a processor associated with the electronic device 201 to perform one or more steps of the method 1300 of FIG.

13. That is, in at least some example embodiments, the electronic device 201 may be configured to perform the method 1300 of FIG. 13.

In at least some embodiments, one or more functions or features of the method 1300 may be performed by the reflectance-based input device 261 (FIG.3). For example, a diode controller 269 associated with the reflectance-based input device 261 may be configured to perform one or more steps of the method 1300 of FIG. 13.

In at least some embodiments, one or more of the functions or features of the method 1300 of FIG. 13 may be performed, in whole or in part, by another system, software application, module, component or device apart from those specifically listed above. For example, in at least some embodiments, one or more functions or features of the method 1300 may be performed by a gesture companion device 1400 (FIG. 14). The gesture companion device 1400 may act as an input device for an associated electronic device and may connect to the associated electronic device wirelessly.

First, at 1302, the electronic device determines whether one or more predetermined triggers have been received. A predetermined trigger may be a command which must be input to the electronic device 201 to begin using rotational gestures on the electronic device 201. That is, the predetermined trigger may be user input which may be input to the electronic device through one or more input interfaces 206 (FIG. 3) to cause the electronic device to enter a rotational gesture mode.

Since rotational gestures require the presence of an object in a sensing area 106 (FIG. 2) of the electronic device 201, in some embodiments, the predetermined trigger is a trigger which also requires the presence of an object within the sensing area 106. For example, in some embodiments, the predetermined trigger may be a horizontal gesture and/or a vertical gesture as discussed above. That is, in some embodiments, when a horizontal gesture is performed, the rotational gesture mode may be initiated. In some embodiments, when a vertical gesture is performed, the rotational gesture mode may be initiated.

If the predetermined trigger(s) are not received, then at 1304, the electronic device 201 will not enter the rotational gesture mode.

If, however, the predetermined trigger(s) are received, then at 1306, the electronic device 1306 will select a neutral orientation for an object within the sensing area 106. That is, the electronic device 201 will select a reference point which will be considered a neutral position. When the object is in the neutral position, no rotation will be interpreted as occurring. Any rotation of the object will be evaluated relative to the neutral position. Accordingly, in at least some embodiments, at 1306 the electronic device may log reflectance measurements which are obtained by performing the reflectance measuring routine described above with reference to 402 of FIG. 4.

In at least some embodiments, at 1306, x and y scrolling positions, which represent the neutral orientation, may be determined as:

$$x = \frac{x_1 + x_2}{2}, and \; y = \frac{y_1 + y_2}{2}, where$$

$$x_1 = \frac{a_3(n) - a_2(n)}{a_3(n) + a_2(n)}$$

$$x_2 = \frac{a_4(n) - a_1(n)}{a_4(n) + a_1(n)}$$

$$y_1 = \frac{a_1(n) - a_2(n)}{a_1(n) + a_2(n)}$$

$$y_2 = \frac{a_4(n) - a_3(n)}{a_4(n) + a_3(n)}$$

where $a_1(n)$ is the amplitude of received light associated with the first infrared diode 102a, $a_2(n)$ is the amplitude of received light associated with the second infrared diode 102b, $a_3(n)$ is the amplitude of received light associated with the third infrared diode 102c, and $a_4(n)$ is the amplitude of received light associated with the fourth infrared diode 102d. These amplitudes may be determined based on the reflected light obtained during the reflectance monitoring routine.

After the neutral orientation is established, at 1307, the reflectance monitoring routine described above with reference to 402 of FIG. 4 may be performed again.

At 1308, the electronic device 201 considers the changes in reflected light at the photodiodes 104a, 104b during the reflectance monitoring routine of 1307. More particularly, the electronic device 201 determines, in at least some embodiments, whether any such change should be interpreted as a change in the x direction or whether any such change should be interpreted as a change in the y direction. That is, the electronic device 201 may determine whether the change during that measuring routine was primarily a change in the x direction or a change in the y direction. For example, the electronic device 201 may determine whether the object, such as the hand 506 was primarily rotated in the manner illustrated in FIG. 11 or whether the hand 506 was primarily rotated in the manner illustrated in FIG. 12. In at least some embodiments, the electronic device 201 may determine whether the change is primarily a change in the x direction or a change in the y direction by determining first derivatives of light measurements associated with each infrared diode. That is, the rate of change in the x direction and the y direction may be used to determine whether the movement represents a change in the x direction or a change in the y direction.

In at least some embodiments, in order to determine whether the rotation was primarily a rotation in the x direction (that is, whether the change was primarily a change in the x direction), the electronic device 201 may compare the change in reflected light in the x direction with the change in reflected light in the y direction. For example, in some embodiments, the electronic device 201 may determine whether the following expression is true and, if so, determine that the change is primarily a change in the x direction:

$$\left((|\dot{a}'_1(n) + \dot{a}'_2(n)| > |\dot{a}'_1(n) + \dot{a}'_4(n)|) \wedge (|\dot{a}'_1(n) + \dot{a}'_2(n)| > |\dot{a}'_2(n) + \dot{a}'_3(n)|)\right) \vee ((|\dot{a}'_3(n) + \dot{a}'_4(n)| > |\dot{a}'_1(n) + \dot{a}'_4(n)|) \wedge (|\dot{a}'_3(n) + \dot{a}'_4(n)| > |\dot{a}'_2(n) + \dot{a}'_3(n)|))$$

where $\dot{a}'_i(n)$ may be the smoothed first derivative of received light associated with an infrared diode i.

If, at 1308, the electronic device determines that the change is primarily a change in the y direction, then at 1310, the electronic device 201 may determine whether an amount of change exceeds a predetermined threshold. This feature ensures that minor movements of an object due a person's inability to hold the object perfectly still are not inadvertently treated as intentional movements.

In at least some embodiments, at 1310, the electronic device 201 may quantify the change. That is, the electronic device 201 may determine a number which represents the amount of change in the y direction. In at least some embodiments, this change in the x direction, $d_y$, may be determined as:

$$d_y = c \cdot \left(\dot{a}'_1(n) + \dot{a}'_4(n) - \dot{a}'_2(n) - \dot{a}'_3(n)\right)$$

where c is a predetermined constant.

Accordingly, in at least some embodiments, at 1310, the electronic device 201 may determine whether the change in the y direction is greater than a predetermined threshold. If the change in the y direction is greater than the predetermined threshold, then at 1314 the scrolling positions may be updated (e.g. the neutral orientation may effectively be reestablished) and a function (such as a scrolling function) may be performed on the electronic device 201 based on the change (for example, the electronic device 201 may scroll a document or otherwise navigate in the y direction). This function may be performed at 406 of FIG. 4.

If, however, the change in the y direction is not greater than the threshold, then, at 1312, the electronic device 201 may not update the scrolling position and may not perform a function based on the change.

If, at 1308, the change is interpreted as a change in the x direction, then at 1316, the electronic device 201 may quantify the change. That is, the electronic device 201 may determine a number which represents the amount of change in the x direction. In at least some embodiments, this change in the y direction, $d_x$, may be determined as:

$$d_x = c \cdot \left( \dot{a}_3'(n) + \dot{a}_4'(n) - \dot{a}_2'(n) - \dot{a}_1'(n) \right)$$

where c is a predetermined constant.

Accordingly, in at least some embodiments, at 1316, the electronic device 201 may determine whether the change in the x direction is greater than a predetermined threshold. If the change in the x direction is greater than the predetermined threshold, then at 1320 the scrolling positions may be updated (e.g. the neutral orientation may effectively be reestablished) and a function (such as a scrolling function) may be performed on the electronic device 201 based on the change (for example, the electronic device 201 may scroll a document or navigate in the x direction). This function may be performed at 406 of FIG. 4.

If, however, the change in the x direction is not greater than the threshold, then, at 1318, the electronic device 201 may not update the scrolling position and may not perform a function based on the change.

After the updates at 1314 or 1320 and/or the lack of updates at 1312 or 1318, the method 1300 may return to 1307 where the reflectance measuring routine may again be performed.

Accordingly, the method 1300 of FIG. 13 may, in at least some embodiments, be used to provide a contactless navigational device. That is, the rotational movements of an object, such as a hand 506 within a plane may be translated to movements in a two dimensional plane, such movements of a cursor on a flat display. That is, a navigational function may be performed in response to the rotational gesture. The direction associated with the navigational function which is performed may depend on the direction of the rotational movement. That is, if the rotation of the object is primarily a rotation in an x direction, then a navigational function in an x direction is performed and, if the rotation of the object is primarily a rotation in a y direction, then a navigational function in a y direction is performed.

**Example Gesture Companion Device**

As noted above, in at least some embodiments, features described herein may be provided collectively by two or more electronic devices. For example, in some embodiments a gesture companion device 1400 (an example of which is illustrated in FIG. 14) may wirelessly connect to another electronic device, which may be referred to as a primary electronic device. The gesture companion device 1400 includes a reflectance-based input device 261 of the type described above with reference to FIGs. 1 and 2. Accordingly, the reflectance-based input device 261 may include infrared diodes 102a, 102b, 102c, 102d and photodiodes 104a, 104b which may be arranged as described above with reference to FIGs. 1 and 2.

The gesture companion device 1400 may include a short range communication subsystem (not shown), which may be of the type described above with reference to FIG. 3. The short range communication subsystem may allow the gesture companion device 1400 to connect to another electronic device 201 via a wireless communication protocol, such as Bluetooth. In at least some embodiments, the gesture companion device 1400 connects to the primary electronic device via a Bluetooth 4.0 low energy protocol.

Thus, the gesture companion device 1400 may include features described above with reference to FIG. 3.

The gesture companion device 1400 may be configured to perform a reflectance measuring routine of the type described above and to transmit, via the short range communication subsystem, an output based on the results of the reflectance measuring routine. That is, the gesture companion device 1400 may transmit the output to the primary electronic device. The primary electronic device may then perform a function based on the received data.

As illustrated in FIG. 14, the gesture companion device 1400 may be a small electronic device which permits a user to easily carry the electronic device. In at least some embodiments, the gesture companion device 1400 is a wearable electronic device, such as a watch. In the example illustrated, the gesture companion device 1400 is designed to be worn on a wrist 1402 of a user.

The gesture companion device 1400 may, in some embodiments, be used solely to act as a peripheral (i.e. an input device) for the primary electronic device. In other embodiments, the gesture companion device 1400 may have advanced functionality which allows it to provide one or more autonomous features (e.g. it may provide one or more features which do not rely on the primary electronic device). For example, in some embodiments, the gesture companion device 1400 may provide typical watch functions such as, for example, displaying a time and/or date via a display 204 associated with the gesture companion device 1400.

In some embodiments, the gesture companion device 1400 may be equipped with a near field communication (NFC) device which allows the gesture companion device 1400 to communicate with other NFC enabled devices or tags. For example, in at least some embodiments, an NFC equipped gesture companion device 1400 could be used to unlock a door which has an NFC enabled lock. In some embodiments, the NFC device could allow the gesture companion device 1400 to pair with the primary electronic device to allow these electronic devices to communicate over the short range communication subsystem.

The gesture companion device 1400 performs the reflectance measuring routine described above and receives, at the photodiodes 104a, 104b of the reflectance-based input device 261, infrared light. In at least some embodiments, the gesture companion device 1400 transmits this raw data to the primary electronic device where it will be analyzed. In other embodiments, the gesture companion device 1400 analyzes the raw data to determine whether a predetermined gesture has been performed and transmits a message to the primary electronic device if it determines that a predetermined gesture has been performed. The message may specify the type of gesture which was performed. By way of example, if it determines that a horizontal gesture has been performed, it may advise the primary electronic device that a horizontal gesture has been performed.

While FIG. 14 illustrates a gesture companion device 1400 which is formed as a watch, in other embodiments, the gesture companion device 1400 may be in another form. For example, in some embodiments, the gesture companion device 1400 may be designed to rest on a flat surface, such as a table.

While the present application is primarily described in terms of methods, a person of ordinary skill in the art will understand that the present application is also directed to various apparatus such as a handheld electronic device and a server. The handheld electronic device and the server include components for performing at least some of the example aspects and features of the described methods, be it by way of hardware components (such as the memory and/or the processor), software or any combination of the two, or in any other manner. Moreover, an article of manufacture for use with the apparatus, such as a pre-recorded storage device or other similar computer readable medium including program instructions recorded thereon, or a computer data signal carrying computer readable program instructions may direct an apparatus to facilitate the practice of the described methods. It is understood that such apparatus, articles of manufacture, and computer data signals also come within the scope of the present application.

The term "computer readable medium" as used herein means any medium which can store instructions for use by or execution by a computer or other computing device including, but not limited to, a portable computer diskette, a hard disk drive (HDD), a random access memory (RAM), a read-only memory (ROM), an erasable programmable-read-only memory (EPROM) or flash memory, an optical disc such as a Compact Disc (CD), Digital Versatile Disc (DVD) or Blu-ray™ Disc, and a solid state storage device (e.g., NAND flash or synchronous dynamic RAM (SDRAM)).

Example embodiments of the present application are not limited to any particular operating system, system architecture, mobile device architecture, server architecture, or computer programming language.

The various embodiments presented above are merely examples and are in no way meant to limit the scope of this application. Variations of the innovations described herein will be apparent to persons of ordinary skill in the art, such variations being within the intended scope of the present application. In particular, features from one or more of the above-described example embodiments may be selected to create alternative example embodiments including a sub-combination of features which may not be explicitly described above. In addition, features from one or more of the above-described example embodiments may be selected and combined to create alternative example embodiments including a combination of features which may not be explicitly described above. Features suitable for such combinations and sub-combinations would be readily apparent to persons skilled in the art upon review of the present application as a whole. The subject matter described herein and in the recited claims intends to cover and embrace all suitable changes in technology.

**Claims**

1. A method for receiving reflectance-based input on an electronic device (201), the electronic device (201) including a plurality of electromagnetic radiation emitting devices and one or more electromagnetic radiation receiving devices for receiving reflected light from the electromagnetic radiation emitting devices, the method comprising:

    repeatedly performing a reflectance measuring routine, the reflectance measuring routine including: alternately outputting light at each of the plurality of electromagnetic radiation emitting devices; and monitoring light received at one or more of the electromagnetic radiation receiving devices as a result of the alternating output; determining, based on the light received at the one or more electromagnetic radiation receiving devices, whether a predetermined gesture has been performed; and

performing a function associated with the predetermined gesture when the predetermined gesture has been performed.

2. The method of claim 2, wherein the predetermined gesture is a contactless gesture which does not require contact with the electronic device (201).

3. The method of any one of claims 1 or 2, wherein the predetermined gesture is a vertical gesture in which an object is moved in a direction which is substantially perpendicular to a front face of the electronic device (201).

4. The method of claim 3, wherein determining whether the vertical gesture has been performed comprises:

   determining whether the amplitude of light received at the one or more electromagnetic radiation receiving devices exhibits the same trend at the same time for each electromagnetic radiation emitting device and, if so, determining that a vertical gesture has been performed.

5. The method of any one of claims 3 or 4, wherein determining whether the vertical gesture has been performed comprises:

   obtaining an amplitude curve for each of the electromagnetic radiation emitting devices from the monitored light received; and
   determining whether the amplitude curves for the electromagnetic radiation emitting devices are aligned; and
   if the amplitude curves for the electromagnetic radiation emitting devices are aligned, determining that a vertical gesture has been performed.

6. The method of any one of claims 1 to 3, wherein the predetermined gesture is an inward vertical gesture in which an object is moved toward the electronic device (201) in a direction which is substantially perpendicular to a front face of the electronic device (201), and wherein determining whether the predetermined gesture has been performed comprises:

   determining whether amplitudes of received light associated with each of the electromagnetic radiation emitting devices have corresponding periods of increasing amplitudes of light and, if so, determining that the inward vertical gesture has been performed.

7. The method of any one of claims 1 to 3, wherein the predetermined gesture is an outward vertical gesture in which an object is moved away from the electronic device (201) in a direction which is substantially perpendicular to a front face of the electronic device (201), and wherein determining whether the predetermined gesture has been performed comprises:

   determining whether amplitudes of received light associated with each of the electromagnetic radiation emitting devices have corresponding periods of decreasing amplitudes of light and, if so, determining that the outward vertical gesture has been performed.

8. The method of any one of claims 1 or 2, wherein the predetermined gesture is a horizontal gesture in which an object is moved parallel to a plane formed by the electromagnetic radiation emitting devices and wherein determining whether the predetermined gesture has been performed comprises:

   obtaining an amplitude curve for each of the electromagnetic radiation emitting devices from the monitored light received; and
   determining, whether the amplitude curves for the electromagnetic radiation emitting devices each include a spike and whether the spike for at least two of the electromagnetic radiation emitting devices are offset from one another; and
   when the amplitude curves for the electromagnetic radiation emitting devices each include a spike and the spike for at least two of the electromagnetic radiation emitting devices are offset from one another, determining that the horizontal gesture has been performed.

9. The method of claim 8 wherein determining whether a predetermined gesture has been performed includes:

   determining a direction associated with a performed gesture.

**10.** The method of claim 9, wherein determining a direction associated with a performed gesture comprises:

performing a cross correlation based on the amplitude curves to determine a delay in an x direction and a delay in a y direction; and
obtaining an angle of movement by applying a trigonometric function to the delay in the x direction and the delay in the y direction.

**11.** The method of any one of claims 1 or 2, wherein the gesture is a rotational gesture in which an object is rotated.

**12.** The method of claim 11, wherein the function associated with the rotational gesture is a navigational function.

**13.** The method of claim 12, further comprising:

determining whether a rotation of the object is primarily a rotation in an x direction or a rotation in a y direction, and wherein, performing a function associated with the predetermined gesture comprises:

if the rotation of the object is primarily a rotation in an x direction, then a navigational function in an x direction is performed and wherein, if the rotation of the object is primarily a rotation in a y direction, then a navigational function in a y direction is performed.

**14.** An electronic device (201) comprising:

a reflectance-based input device (261), the reflectance-based input device comprising a plurality of electromagnetic radiation emitting devices and one or more electromagnetic radiation receiving devices for receiving reflected light from the electromagnetic radiation emitting devices, the reflectance-based input device being configured to repeatedly perform the reflectance measuring routine of the method of any one of claims 1 to 13; and
a processor (240) communicably coupled to the reflectance-based input device (261), the processor (240) being configured to determine whether a predetermined gesture has been performed in the manner described in any one of claims 1 to 13.

**15.** A gesture companion device comprising:

a reflectance-based input device (261) comprising: a plurality of electromagnetic radiation emitting devices and one or more electromagnetic radiation receiving devices for receiving reflected light from the electromagnetic radiation emitting devices; and
a short range communication subsystem (262) for sending data to a primary electronic device based on the received reflected light.

**FIG. 1**

**FIG. 2**

FIG. 3

EP 2 626 769 A1

400

402 — Repeatedly Perform
Reflectance Measuring
Routine

404 — Has Predetermined
Gesture been performed?

No → Perform
Reflectance
Measuring
Routine — 408

Yes

406 — Perform Function
Associated with
Predetermined
Gesture

**FIG. 4**

28

**FIG. 5**

**FIG. 6**

**FIG. 7**

**FIG. 8**

900

902 — Define Axes

904 — Cross Correlate to determine delay in x and delay in y

904 — Calculate Direction Using Trigonomentry

**FIG. 9**

1000

1002 — Obtain Amplitude Curves

1004 — Condition Met?

No → Interpret as Non-gesture — 1005

Yes

1006 — Obtain First Derivatives

1008 — Cross Correlate and find delay

1010 — Delay > Threshold?

No → Determine that Vertical Gesture has been performed — 1012

Yes

1014 — Determine that Horizontal Gesture has been performed

**FIG. 10**

**FIG. 11**

EP 2 626 769 A1

1202

1206

506

1204

112    204    201

**FIG. 12**

36

**FIG. 13**

**FIG. 14**

**EUROPEAN SEARCH REPORT**

Application Number

EP 12 15 4850

Europäisches Patentamt
European Patent Office
Office européen des brevets

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2010/295773 A1 (ALAMEH RACHID [US] ET AL) 25 November 2010 (2010-11-25) * abstract; figures 1-33 * * paragraphs [0032], [0033], [0038], [0049], [0054], [0057] - [0060], [0062], [0064], [0065], [0068] - [0071], [0080], [0082] - [0133] * | 1-15 | INV. G06F3/01 G06F3/03 G06F1/16 |
| X | US 2011/310005 A1 (CHEN AN M [US] ET AL) 22 December 2011 (2011-12-22) * abstract; figures 1-20 * * paragraphs [0013], [0015], [0033], [0035], [0036], [0041], [0044] - [0068], [0072], [0074] * | 1-11,14, 15 | |

**TECHNICAL FIELDS SEARCHED (IPC)**

G06F

The present search report has been drawn up for all claims

| Place of search | Date of completion of the search | Examiner |
|---|---|---|
| Munich | 13 June 2012 | Köhn, Andreas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 12 15 4850

This annex lists the patent family members relating to the patent documents cited in the above-mentioned European search report.
The members are as contained in the European Patent Office EDP file on
The European Patent Office is in no way liable for these particulars which are merely given for the purpose of information.

13-06-2012

| Patent document cited in search report | Publication date | Patent family member(s) | Publication date |
|---|---|---|---|
| US 2010295773 A1 | 25-11-2010 | CN 102439538 A<br>KR 20120019453 A<br>US 2010295773 A1<br>WO 2011082004 A1 | 02-05-2012<br>06-03-2012<br>25-11-2010<br>07-07-2011 |
| US 2011310005 A1 | 22-12-2011 | US 2011310005 A1<br>WO 2011160079 A1 | 22-12-2011<br>22-12-2011 |

For more details about this annex : see Official Journal of the European Patent Office, No. 12/82